# EUROPÄISCHE PATENTSCHRIFT

(11) **EP 1 987 104 B1**
(45) Veröffentlichungstag und Bekanntmachung des Hinweises auf die Patenterteilung: **03.11.2010**
(21) Anmeldenummer: 07722916.9
(22) Anmeldetag: 23.02.2007
(51) Int. Cl.: C09C 1/00, C08K 9/02, C09D 5/36

(54) **WETTERSTABILE PERLGLANZPIGMENTE AUF BASIS DÜNNER GLASPLÄTTCHEN UND VERFAHREN ZU DEREN HERSTELLUNG**
WEATHER-RESISTANT PEARLESCENT PIGMENTS BASED ON SMALL THIN GLASS PLATES, AND METHOD FOR THE PRODUCTION THEREOF
PIGMENTS NACRES RESISTANTS A L'EAU A BASE DE PETITES PLAQUES DE VERRE MINCE, ET PROCEDE DE PRODUCTION ASSOCIE

(30) Priorität: 24.02.2006 DE 102006009130
(43) Veröffentlichungstag der Anmeldung: 05.11.2008
(73) Patentinhaber: Eckart GmbH, 91235 Hartenstein (DE)
(72) Erfinder: SCHMIDT, Ulrich, 91217 Hersbruck (DE); SCHUMACHER, Dirk, 91257 Pegnitz (DE); KAUPP, Günter, 91284 Neuhaus (DE)
(74) Vertreter: LOUIS, PÖHLAU, LOHRENTZ
(86) Internationale Anmeldenummer: PCT/EP2007/001603
(87) Internationale Veröffentlichungsnummer: WO 2007/098897

(56) Entgegenhaltungen:
- EP-A- 1 203 795
- EP-A- 1 281 732
- EP-A- 1 306 412
- EP-A- 1 469 042
- EP-A1- 0 141 174
- EP-A1- 0 632 109
- WO-A-2004/092284
- WO-A-2004/104109
- WO-A-2005/075579
- WO-A-2006/021386
- WO-A-2006/021388
- DE-A1- 10 354 763

## Beschreibung

Die Erfindung betrifft wetterstabile Perlglanzpigmente mit verbesserten anwendungstechnischen Eigenschaften auf der Basis eines mit hochbrechenden Metalloxiden beschichteten Glasplättchens und einer auf der obersten Metalloxidschicht befindlichen Schutzdeckschicht.

Des Weiteren betrifft die Erfindung Verfahren zur Herstellung dieser Perlglanzpigmente als auch deren Verwendung.

Perlglanzpigmente, die Titandioxid in der Deckschicht enthalten bzw. die aus partikelförmigem TiO₂ aufgebaut sind, besitzen eine gewisse photokatalytische Aktivität. Wirkt nun UV-Licht in Gegenwart von Wasser und Sauerstoff auf ein Perlglanzpigment ein, so kann die UV-Aktivität des Perlglanzpigments einen beschleunigten Abbau von organischen Verbindungen, z. B. einer Bindemittelmatrix, auslösen. Bereits der im Tageslicht enthaltene UV-Anteil kann diese Reaktion bedingen, d.h. für Applikationen wie Automobillackierungen, die der Witterung direkt ausgesetzt sind, müssen besonders stabilisierte Perlglanzpigmente eingesetzt werden. Um diesen für die Außenanwendung nachteiligen photokatalytischen Effekt entgegenzuwirken, können Perlglanzpigmente zur Verminderung der Photoaktivität mit verschiedenen Schutzbeschichtungen ausgestattet werden.

Üblicherweise werden dabei - ausgehend von wässrigen Metallsalzlösungen - schwerlösliche Verbindungen auf die Oberfläche der Pigmente gefällt, wobei neben Sauerstoffverbindungen des Aluminiums oder des Siliziums in der Regel mindestens ein Übergangsmetall, wie z.B. Zirkonium, Mangan, Cer oder Chrom, an der Schutzbeschichtung beteiligt ist. Um die Kompatibilität der Pigmente zu unterschiedlichen Lacken, insbesondere aber zu den besser umweltverträglichen wasserbasierenden Systemen, zu fördern, wird in der Regel noch eine zusätzliche organische Modifizierung der Deckschicht, z.B. mittels Silanen, aufgebracht.

In der EP 0 141 174 werden Perlglanzpigmente mit verbesserter Witterungsbeständigkeit beschrieben, die eine Schutzbeschichtung aufweisen, die im Wesentlichen aus einer Seltenerdmetallverbindung, z.B. Cer - und einem Polysiloxan, besteht. Außerdem können in der Schutzbeschichtung, die in einer wässrigen Suspension erfolgt, Zink- bzw. Aluminiumsalze oder auch Silikat enthalten sein. Die Beschichtung selbst erfolgt in wässriger Suspension und das Produkt wird nach der Isolierung getrocknet.

Die DE 2106613 beschreibt Perlglanzpigmente, die direkt im Anschluss an die Metalloxidbelegung der Glimmerschuppen in wässriger Phase mit einer Kieselsäureschicht überzogen und nachfolgend kalziniert werden. Das Ziel ist hierbei, die optischen Eigenschaften der Pigmente wie Glanz, Transparenz und Farbe positiv zu beeinflussen. Diese Pigmente sind jedoch nicht ausreichend gegenüber UV-Licht stabilisiert.

Die EP 0446986B1 betrifft Perlglanzpigmente für Lackanwendungen, die durch eine glatte, geschlossene Aluminiumoxid-Hydratschicht eine annehmbare Licht- und Feuchtigkeitsbeständigkeit besitzen. Unter Verwendung von sauren oder alkalischen Aluminiumsalzen werden Perlglanzpigmente in wässriger Phase unter kontrollierten Bedingungen beschichtet und anschließend getrocknet.

Die EP 0 342 533 offenbart mit Zirkoniumoxid belegte Pigmente, auf die eine aus einem hydratisierten Metalloxid von Kobalt, Mangan oder Cer bestehende Schicht aufgebracht werden kann. Das so behandelte Pigment soll jetzt zwar in nichtwässrigen Lacksysteme gut einsetzbar sein, für wasserverdünnbare Lacke ist es aber gemäß der EP 632109 nach wie vor ungeeignet, da hier die Bildung von mikrofeinen Bläschen im Lackfilm verursacht wird.

Gemäß der Lehre der EP 0 632 109 wird eine dreischichtige Schutzschicht auf ein mit Metalloxiden belegtes plättchenförmiges Substrat aufgebracht. In einer 1. Stufe wird SiO₂, in einer 2. Stufe wird ein Hydroxid oder Oxid-Hydrat von Cer, Aluminium oder Zirkonium und in einer 3. Stufe werden mindestens ein Hydroxid oder Oxid-Hydrat von Cer, Aluminium oder Zirkonium sowie ein organisches Kupplungsreagenz aufgebracht. Darüber hinaus müssen die Kupplungsreagenzien vor der Bindung an die Pigmentoberfläche hydrolysiert werden, wobei gemäß der Lehre der EP 0 888 410 B1 nur maximal 60 % der zugesetzten Kupplungsreagenzien an die Pigmentoberfläche gebunden werden können.

Die EP 0 888 410 B1 offenbart modifizierte Perlglanzpigmente auf der Basis eines mit Metalloxiden beschichteten, plättchenförmigen Substrates. Gemäß der Lehre der EP 0 888 410 B1 besteht die Deckschicht aus mindestens zwei Oxiden, gemischten Oxiden oder Mischoxiden von Siliziumdioxid, Aluminiumoxid, Ceroxid, Titanoxid oder Zirkoniumoxid und einem wasserbasierenden oligomeren Silansystem. Es sind keine Untersuchungen zum Einfluss der Reihenfolge der oxydischen Schutzschichten hinsichtlich ihrer Wirksamkeit auf die UV-Stabilität des Perlglanzpigmentes offenbart. Daher ist auch kein optimaler Schutzschichtaufbau beschrieben. Weiterhin kann das wasserbasierende oligomere Silansystem nur hydrophobe Anteile bis maximal acht C-Atome enthalten, da andernfalls seine Wasserlöslichkeit nicht gegeben ist. Daher ist hier die Variationsmöglichkeit der Nachbeschichtung begrenzt.

DE 103 54 763 beschreibt Effektpigmente mit einem Aluminium- oder Aluminiumlegierungskern und einer den Aluminium- oder Aluminiumlegierungskern umhüllenden Aluminiumoxid- oder Aluminiumoxid/hydroxid-haltigen Schicht, erhältlich durch nasschemische Oxidation plättchenförmiger Aluminium- oder Aluminiumlegierungs-Pigmente.

EP 1 469 042 betrifft ein Pigmentgemisch bestehend aus mindestens zwei Komponenten, wobei Komponente A Effektpigmente auf Basis von dünnen Glasplättchen und Komponente B plättchenförmige, nadelförmige, sphärische oder kristalline Farbmittel und/oder Füllstoffe sind.

EP 1 306 412 offenbart farbige Interferenzpigmente auf der Basis von mehrfach beschichteten plättchenförmigen Substraten.

EP 1 281 732 beschreibt mehrschichtige Interferenzpigmente, welche ein plättchenförmiges Substrat aus Siliziumdioxid umfassen, welches abwechselnd mit Schichten aus lichtdurchlässigen Materialien (I) und Schichten aus lichtdurchlässigen Materialien (II) beschichtet ist, wobei die lichtdurchlässigen Materialien vorgegeben Brechzahlen aufweisen.

Aus der WO 2006/021386 und der WO 2006/021388 sind Perlglanzpigmente mit Metalloxid-haltigem, plättchenförmigen Substrat mit einer ersten und einer zweiten Schutzschicht bekannt, wobei das Metalloxid einen Brechungsindex von größer als 1,8 hat.

EP 1 203 794 betrifft nachbeschichtete Perlglanzpigmente sowie ein Verfahren zu deren Herstellung.

Aus der WO 2004/104109 sind plättchenförmige Pigmentsubstrate bekannt, welche eine kohlenstoffhaltige Beschichtung aufweisen, wobei die kohlenstoffhaltige Beschichtung eine pyrolysierte kohlenstoffhaltige Spezies umfasst.

WO 2005/075579 offenbart oberflächenmodifizierte mit Siliziumdioxid umhüllte Metalloid/Metalloxidpartikel, ein Verfahren zu ihrer Herstellung, sowie ihre Verwendung.

Gegenstand der EP 0 649 886 sind Perlglanzpigmente mit Titandioxid- oder Eisenoxidbeschichtung, die in wässriger Phase mit einer Kombination aus Cer- und Aluminiumoxidhydraten nachbeschichtet und anschließend getrocknet werden.

Gemäß der Lehre der EP 1 203 795 kann ein Perlglanzpigment einen Schichtaufbau, der in einer ersten Schicht Oxidhydrate des Siliziums oder Aluminiums enthält und in einer nachfolgenden zweiten Schicht Oxidhydrate des Siliziums, Aluminiums, Zirkoniums oder Cers enthält, umfassen, wobei die Zusammensetzung der 1. Schicht von der der 2. Schicht verschieden ist. Das Perlglanzpigment weist ferner eine dritte Schicht aus mindestens einem organischen hydrophoben Kupplungsreagenz auf, wobei das organische hydrophobe Kupplungsreagenz nicht mit dem Bindemittel, beispielsweise eines Lacksystems, reagiert.

In der EP 1 084 198 B1 sind Effektpigmente beschrieben, die aufgrund ihrer Oberflächenbeschichtung mit reaktiven Orientierungsmitteln, sehr gute Haftfestigkeiten zum Basislack aufweisen. Die EP 1 084 198 B1 offenbart vor diesem Hintergrund keine wetterstabilen Perlglanzpigmente.

Bei den meisten dieser bekannten Verfahren wird SiO₂ und/oder Aluminiumoxid als erste Schicht aufgebracht. Eine Ceroxidschicht wird meist im Anschluss daran oder als Mischoxidfällung zusammen mit weiteren Komponenten aufgebracht. Die Anbindung der Silane erfolgt dann in der Regel in einer Mischfällung mit der Fällung der Metallhydroxide in wässriger Lösung. Aufgrund der Mischfällung der Hydroxide und des Silansystems ist die Effektivität der Oberftächehbetegung mit dem oligomeren Silansystem gering. Folglich werden unverhältnismäßig große Mengen der teuren Silane eingesetzt, was die Rohstoffkosten unnötig erhöht.

Beim Übertragen dieser Beschichtungstechnologien auf plättchenförmiges Glas konnten keine Pigmente erhalten werden, welche den heutigen Marktanforderungen gerecht werdende Wetterstabilität aufweisen.

Die WO 02/090448 offenbart Effektpigmente auf Basis von Glasflakes, die als oberste Schicht eine hochbrechende und kalzinierte Metalloxid-Schicht aufweisen. Damit sind diese Pigmente für den Einsatz im Lackbereich für Außenanwendungen nicht geeignet, da diese Pigmente unter Witterungseinfluss zu Kreidung, dem sogenannten "Weißwerden" und zu Haftungs- und Glanzverlusten neigen.

Die WO 2004/092284 betrifft oberflächenmodifizierte Effektpigmente auf der Basis von plättchenförmigen Substraten, wie z. B. Glasplättchen, wobei auf dem Substrat ein oder mehrere kalzinierte Oxidschichten allein oder in Mischung mit Sulfaten, Phosphaten und/oder Boraten sowie eine organische Nachbeschichtung aufgebracht sind. Diese bekannten Pigmente mit kalzinierte Oxidschichten weisen den Nachteil auf, dass die als Oberflächenbeschichtungsmittel eingesetzten Silane eine schlechte Haftung auf geglühten Metalloxidschichten aufweisen.

Diese bekannten Perlglanzpigmente weisen keine den Marktanforderungen gerecht werdende Wetterbeständigkeit auf.

Aufgabe der Erfindung ist es, wetterstabile Perlglanzpigmente auf Basis von plättchenförmigem Glas mit einem einfach aufgebauten und gegenüber dem Stand der Technik verbesserten wirksam schützenden Schichtaufbau bereitzustellen. Der auf die - gegenüber den herkömmlichen Perlglanzpigmenten - eine wesentlich geringere Dicke aufweisenden Glasplättchen aufgetragenen Schichtaufbau soll insbesondere einen wirksamen Schutz gegenüber einer durch UV-Licht induzierten photokatalytischen Aktivität des Pigmentes geben, ohne die optischen Eigenschaften wie Glanz wesentlich zu beeinträchtigen. Weiterhin sollen die erfindungsgemäßen Perlglanzpigmente mit einer organisch-chemischen Oberflächenbeschichtung versehen werden, die ein sehr gutes Orientierungsverhalten der Perlglanzpigmente im Lack bei gleichzeitiger hervorragender Anbindung an das Bindemittel (sehr gute Haftfestigkeit) ermöglicht. Die erfindungsgemäßen Perlglanzpigmente sollen generell eine verbesserte Wetterstabilität besitzen und besonders vorteilhaft in der Automobillackierung Verwendung finden.

Eine weitere Aufgabe ist es, ein einfaches Verfahren zur Herstellung von wetterstabilen Perlglanzpigmenten mit einem einfachen und wirksam schützenden Schichtaufbau bereitzustellen. Weiterhin soll ein einfaches Verfahren zur effektiven Aufbringung der Oberflächenbeschichtung, das eine große Variabilität bzgl. der verwendbaren Nachbeschichtungsreagenzien aufweist, gefunden werden.

Die der Erfindung zugrundeliegende Aufgabe wird durch Bereitstellung von wetterstabilen Perlglanzpigmenten auf der Basis eines mit hochbrechenden Metalloxiden beschichteten Glasplättchens und einer auf der obersten Metalloxidschicht befindlichen Schutzdeckschicht mit einer Oberflächenbeschichtung, gelöst.

Das erfindungsgemäße wetterstabile Perlglanzpigment umfaßt ein Glasplättchen mit einer mittleren Dicke von 50 bis 500 nm, auf das eine Metalloxidschicht mit einem Brechungsindex n größer 1,8, vorzugsweise mit einer mittleren Dicke von 30 bis 300 nm, aufgebracht ist, welche TiO₂ mit einem Rutilgehalt von 80 bis 100 Gew. -% umfasst und einer Schutzdeckschicht, umfassend eine erste Schutzschicht mit Ceroxid und/oder Ceroxidhydrat und/oder Cerhydroxid und eine zweite Schutzschicht aus SiO₂ sowie einer auf die SiO₂-Schicht der Schutzdeckschicht aufgebrachten, organisch-chemischen Oberflächenbeschichtung.

Die Angabe 80 - 100 Gew.-% TiO₂ bezieht sich jeweils auf das Gewicht der TiO₂-Schicht.

Bevorzugte Weiterbildungen des Erfindungsgegenstandes sind in den Unteransprüchen 2 bis 14 angegeben.

Der Erfindungsgegenstand betrifft ein witterungs- und UV- beständiges Perlglanzpigment, das eine reduzierte photokatalytische Aktivität, erhöhte Lichtechtheit und eine optimierte Kompatibilität zu handelsüblichen Lacksystemen aufweist.

Das erfindungsgemäße Pigment, das eine reduzierte photokatalytische Aktivität, erhöhte Lichtechtheit und eine optimierte Kompatibilität zu handelsüblichen Lacksystemen aufweist, wird im Folgenden als "wetterstabil" oder "witterungsstabil" bezeichnet.

Bei den erfindungsgemäßen Perlglanzpignienten auf Glasplättchen-Basis ist die mittlere Dicke des Glasplättchens geringer als 500 nm und besonders bevorzugt von 60 - 350 nm. Derart dünne Glasplättchen eignen sich besonders gut für Automobilanwendungen, da hier die Schichtdicken der Basislackschichten sehr gering sind (12 - 15 µm) und der Trend zu noch geringeren Schichtdicken geht. Durch Verwendung von Glasflakes sehr geringer Schichtdicken als Substrate ist auch die Gesamtschichtdicke der hieraus hergestellten Perlglanzpigmente in einem akzeptablen Rahmen.

Die geringe Dicken der Glasplättchen gewährleistet ein besseres Aspektverhalten und somit eine verbesserte parallele Orientierung der daraus hergestellten Perlglanzpigmente zum Untergrund.

Glasplättchen weisen im Gegensatz zu dem fast ausschließlich verwendeten Glimmer wesentlich glattere Oberflächen auf. Auch ist die Schichtdicke eines einzelnen Glasflakes über seine Längsausdehnung hinweg einheitlicher als bei Glimmer, da dieser als Schichtsilikat typische Stufen aufweist. Die durch derartige Stufen bedingte uneinheitliche Schichtdicke eines einzelnen Plättchens bewirkt nach der Beschichtung mit hochbrechenden Oxiden eine Verminderung ("Vergrauung") des Perlglanzeffektes.

Im Stand der Technik sind andere transparente, synthetische Substrate bekannt, die in Bezug auf die oben genannten Eigenschaften ähnliche Vorzüge besitzen. Hierbei handelt es sich um SiO₂-Plättchen und um Al₂O₃-Plättchen. Perlglanzpigmente auf Basis dieser Substrate werden unter den Namen Colorstream® und Xirallic® von der Fa. Merck hergestellt und vertrieben. Gegenüber diesen Substraten besitzen Glaksflakes jedoch den Vorteil der einfacheren und kostengünstigeren Herstellung.

Weiterhin sind Glasplättchen als Substrate bevorzugt, deren Standardabweichung der Dickenverteilung geringer als 20%, bevorzugt geringer als 15% und besonders bevorzugt geringer als 10% beträgt. Mit diesen Substraten lassen sich besonders farbintensive Perlglanzpigmente mit starken Farbflops herstellen.

Die organisch-chemische Oberflächenbeschichtung besteht aus einem oder mehreren organofunktionellen Silanen, Aluminaten, Zirkonaten und/oder Titanaten.

Die bevorzugt aus - in Wasser unlöslichen oder schlecht löslichen - Silanen bestehende organisch-chemische Oberflächenbeschichtung liegt vorteilhaft nicht als Mischschicht mit der SiO₂-Beschichtung vor.

Die ein Silan-Gemisch enthaltende, organisch-chemische Oberflächenbeschichtung kann äußerst vorteilhaft in einfacher Weise durchgeführt werden und umfasst eine große Vielfalt an Oberflächenmodifizierungsmitteln.

Es hat sich dabei jedoch herausgestellt, das ein Gemisch aus 3-Aminopropyltrimethoxysilan (DYNASYLAN^{®} AMMO; Hersteller Degussa AG) und 3-Glycidyloxypropyl-trimethoxysilan (DYNASYLAN^{®} GLYMO; Hersteller Degussa AG) zu vermeiden ist, da hier die Pigmente zur Agglomeration neigen. Dies ist vermutlich auf die interpartikuläre Reaktion der äußeren Aminogruppen mit den Epoxygruppen zurückzuführen, die ein "Zusammenbacken" der Pigmente bewirkt.

Aufgrund der Vielzahl an verwendbaren Oberflächenmodifizierungsmitteln kann das erfindungsgemäße Pigment für alle üblichen Lacksysteme kompatibel gestaltet werden. Die optischen Eigenschaften wie Glanz sind sehr gut.

Bei einer erfindungsgemäßen Weiterbildung kann das Pigment eine weitere Schutzbeschichtung aus Metalloxiden, die verschieden von Ceroxid und/oder Ceroxidhydrat und/oder Cerhydroxid und SiO₂ ist, bevorzugt ZrO₂, aufweisen.

Das erfindungsgemäße Verfahren zur Bereitstellung des erfindungsgemäßen Perlglanzpigmentes umfasst folgende Schritte:
(a) Suspendieren von metalloxidbeschichtetem Glasplättchen in einer Flüssigphase, wobei das Metalloxid einen Brechungsindex von größer 1,8 aufweist;
(b) Aufbringen einer Schutzdeckschicht mit einer ersten Schutzschicht aus Ceroxid und/oder Ceroxidhydrat und/oder Cerhydroxid und einer zweiten Schutzschicht aus SiO₂ auf das in Schritt (a) suspendierte Glasplättchen;
(c) Aufbringen einer organisch-chemischen Oberflächenbeschichtung auf die in Schritt (b1) oder (b2) erzeugte, oberste Strukturschicht aus SiO₂.

Bevorzugt wird hierbei Schritt (c) mit einem oder mehreren organofunktionellen Silanen in einer Flüssigphase mit einem überwiegenden Anteil an organischem Lösungsmittel durchgeführt. Dabei ist es äußerst vorteilhaft, dass viele Additive, insbesondere hydrophobe Silane, in überwiegend organischen Lösungsmitteln sehr gut lösbar sind. Dadurch sind eine einfache Prozessführung und eine große Variabilität in der Wahl der Oberflächenbeschichtungsmittel gegeben.

Unter einem überwiegend organischen Lösungsmittelgemisch wird hierbei ein solches verstanden, welches vorzugsweise weniger als 50 Gew. -% Wasser enthält.

Der nichtorganische Anteil an Lösungsmittel ist in diesen Fällen bevorzugt Wasser.

Überraschenderweise wurde gefunden, dass eine ausgezeichnete UV- und Wetterstabilität von Perlglanzpigmenten erreicht wird durch ein Perlglanzpigment auf Basis von metalloxidbeschichtetem Glasplättchen mit einer mittleren Dicke von 50 bis zu 500 nm, bevorzugt mit einer mittleren Dicke von 60 bis zu 350 nm und besonders bevorzugt mit einer mittleren Dicke von 70 bis zu 300 nm.

Bei dem erfindungsgemäßen Perlglanzpigment ist direkt auf dem dünnen, metalloxidbeschichteten Glasplättchen eine Schutzdeckschicht mit einer ersten Schutzschicht aus Ceroxid und/oder Ceroxidhydrat und/oder Cerhydroxid und einer zweiten Schutzschicht aus SiO₂ mit einer organisch-chemischen Nachbeschichtung aufgebracht.

Das erfindungsgemäße Perlglanzpigment mit Glasplättchen geringer Dicke, definierter Dickentoleranz und oberflächenmodifizierter Schutzbeschichtung ist für alle dem Fachmann bekannten Anwendungen, besonders bevorzugt aber für Automobilanwendungen, mit Basislackschichten mit sehr geringen Schichtdicken (12 - 15 µm), vorteilhaft einsetzbar. Insbesondere mit dem ein oberflächenmodifiziertes Schutzschichtensystem aus Ceroxid und/oder Ceroxidhydrat und/oder Cerhydroxid und SiO₂ aufweisenden, erfindungsgemäßen Perlglanzpigment ist ein besonders guter UV-Schutz zu realisieren.

Trotz des niedrigen Brechungsindexes von SiO₂, welches die oberste Metalloxidschicht darstellt, weisen die Pigmente überraschenderweise einen sehr guten Glanz auf.

Dies war keinesfalls zu erwarten, heißt es doch in der DE 4207723 A1, S. 2, Zeile 19-21: "Mit Silicat- bzw. mit Al₂O₃ beschichtete Pigmente sind schwer dispergierbar und weisen zusätzlich Glanzeinbußen in Druckfarben und Lackabstrichen auf."

Es hat sich ferner überraschend gezeigt, dass bereits dünne Schichtdicken der Schutzschichten für eine hohe UV-Stabilität ausreichend sind.

Die bei den erfindungsgemäßen Pigmenten zusätzlich vorhandene Cer-haltige Schutzschicht umfasst oder besteht aus Ceroxid und/oder Cerhydroxid und/oder Ceroxidhydrat. Die Cer-haltige Schicht wird durch Fällung von Cerhydroxid aufgebracht und geht durch Entwässerung, beispielsweise unter Wärmebeaufschlagung, teilweise oder vollständig in Ceroxid und/oder Ceroxidhydrat über. Somit kann die Schutzschicht, auch wenn nachfolgend von einer Ceroxidschicht gesprochen wird, neben Ceroxid auch Cerhydroxid und/oder Ceroxidhydrat enthaltene.

Das eingesetzte Cer liegt in dreiwertiger oder in vierwertiger Form oder in Mischungen dieser beiden Formen vor. Vorzugsweise wird Cer in dreiwertiger Form eingesetzt.

Die Menge an eingesetztem Cer, vorzugsweise in Form von Ceroxid und/oder Ceroxidhydrat und/oder Cerhydroxid liegt, vorzugsweise zwischen 0,05 bis 3,0 Gew. -%, weiter vorzugsweise zwischen 0,1 und 1,0 Gew. -% und bevorzugt zwischen 0,2 und 0,7 Gew. -%, jeweils bezogen auf das Gesamtgewicht des Pigmentes. Der Cer-Gewichtsanteil sollte, bezogen auf die eingesetzte Menge an Pigment, vorzugsweise nicht über 1,0 Gew. -% liegen, da andernfalls Verluste der optischen Qualität des Pigmentes zu stark sein könnten. Unterhalb eines Gewichtsanteils von 0,1 Gew. -% wiederum ist die zusätzliche UV-Stabilisierung in der Regel nicht ausgeprägt genug.

Im Einzelfall hängt der Gewichtsanteil von der Feinheit und damit einhergehend von der spezifischen Oberfläche des Perlglanzpigmentes sowie von der Dicke der TiO₂-Schicht ab. Feinere Pigmente und dickere TiO₂-Schichten benötigen im Allgemeinen auch einen höheren Gehalt an Ceroxid und/oder Cerhydroxid und/öder Ceroxidhydrat.

Die bei den erfindungsgemäßen Perlglanzpigmenten vorhandene SiO₂-Schutzschicht weist eine mittlere Dicke von 1 bis 50 nm, bevorzugt 2 bis 20 nm, weiter bevorzugt 2,5 bis 7 nm, auf.

Der SiO₂-Gehalt der erfindungsgemäßen Perlglanzpigmente liegt bei einem Anteil von 0,5 bis 8 Gew. -%, bevorzugt von 1,0 bis 6,5 Gew.-% und besonders bevorzugt von 1,5 bis 5 Gew.-%, weiter bevorzugt von 1,8 bis 4,5 Gew.-%, jeweils bezogen auf das Gesamtgewicht des Pigmentes.

Auch hier hängt im Einzelfall die SiO₂-Menge von der mittleren Dicke des Glasplättchens, der Feinheit und damit einhergehend von der spezifischen Oberfläche des Perlglanzpigmentes sowie von der Dicke der TiO₂-Schicht ab. Pigmente mit dünneren Glasplättchen, feinere Pigmente und dickere TiO₂-Schichten weisen im Allgemeinen einen höheren SiO₂-Gehalt auf. Oberhalb von 10 Gew. -% SiO₂ beobachtet man keinerlei weitere Verbesserung der Wetter- und UV-Stabilität. Oft sogar werden die Eigenschaften schlechter, vermutlich da die dickeren Schutzschichten spröde und/oder brüchig sind und leichter Risse entstehen, so dass die Photoaktivität des beschichteten TiO₂ nicht mehr wirksam genug unterdrückt wird. Unterhalb von 0,5 Gew. -% ist die schützende Wirkung der SiO₂-Schicht zu gering.

In der SiO₂-Schutzdeckschicht können neben SiO₂ auch Hydroxide und/oder Oxidhydrate des Siliziums enthalten sein.

Bei einem Perlglanzpigment ist die überraschend hohe Wirksamkeit einer lediglich aus Silikat aufgebauten Beschichtung zur Wetterstabilisierung von Perlglanzpigmenten vermutlich unter anderem auf die elektronische Natur der SiO₂-Schicht zurückzuführen. Es wird vermutet, dass die energetische Lage der Bandkanten von SiO₂ im Vergleich zu jener des TiO₂ im vorzugsweise verwendeten TiO₂-beschichteten Perlglanzpigment derart günstig ist, daß der Transfer insbesondere von Elektronen-Löchern, aber auch von Elektronen, die nach Absorption von UV-Photonen im Halbleiter TiO₂ entstehen, an die Grenzfläche des Pigmentes wirksam unterdrückt wird ("Diodeneffekt"). Dies erscheint plausibel, da eine wirksame Wetterstabilisierung von Perlglanzpigmenten bereits bei äußerst dünnen SiO₂-Schichtdicken von umgerechnet nur ca. 2 bis 3 nm zu beobachten ist. Neben einem elektronischen Effekt ist vermutlich auch ein gewisser Barriereeffekt für die Wetterstabilisierung maßgeblich. Hier wird unter anderem Wasser von der TiO₂-Grenzfläche ferngehalten. Aufgrund der geringen Schichtdicken ist dieser Effekt vermutlich jedoch nicht ausschlaggebend. Die Schichtdicke der SiO₂-Schichten liegen vorzugsweise in einem Bereich von 2 nm bis 20 nm, weiter bevorzugt von 2,5 nm bis 7 nm.

Es wird vermutet, dass die noch besseren Wetter- und UV-Beständigkeiten beim erfindungsgemäßen Pigmenttyp, neben dem oben erwähnten Effekt der SiO₂-Schicht insbesondere auf die erfindungsgemäße Schichtenfolge von zunächst Ceroxid und nachfolgend SiO₂ zurückzuführen ist. Ceroxid und/oder Ceroxidhydrat und/oder Cerhydroxid ist als sehr wirksames Mittel zur Unterdrückung der photochemischen Aktivität von TiO₂ an sich bekannt. Die Wirksamkeit beruht wohl vor allem auf dem bekannten Ce(III)/Ce(IV) Redoxsystem. Hierdurch können Radikale, die infolge der photochemischen Aktivität des TiO₂ an dessen Oberfläche generiert werden, wirksam abreagieren. Offenbar ist diese Effizienz von Ceroxiden als Barriere für photokatalytisch erzeugte Radikale besonders hoch, wenn Ceroxid und/oder Ceroxidhydrat und/oder Cerhydroxid bereits als erste Schicht mit direktem Kontakt zur TiO₂-Oberfläche des vorgelegten Pigments abgeschieden wird.

Bei dem erfindungsgemäßen Pigment ist bevorzugt, die Ceroxid und/oder Ceroxidhydrat und/oder Cerhydroxid -Schicht direkt auf der TiO₂-Schicht aufzubringen. Die Ceroxid und/oder Ceroxidhydrat und/oder Cerhydroxid-Schicht muß aber nicht direkt auf der TiO₂-Schicht aufgebracht werden. Die Ceroxid- und/oder Ceroxidhydrat- und/oder Cerhydroxidschicht wird vorzugsweise durch alleinige Fällung, d.h. nicht als Mischfällung aufgebracht, so dass die Ceroxid und/oder Ceroxidhydrat und/oder Cerhydroxidschicht vorzugsweise im wesentlichen frei von weiteren Metalloxiden ist.

Bevorzugt ist die Cer-haltige Schicht aus Ceroxid und/oder Ceroxidhydrat und/oder Cerhydroxid eine diskrete Schicht, die mit der darunterliegenden Schicht, beispielsweise eine Metalloxidschicht wie eine Titanoxidschicht, keine Mischschicht ausbildet.

Bei dem erfindungsgemäßen Pigmenttyp ist des Weiteren bevorzugt, die SiO₂-Schicht direkt auf der Ceroxid- und/oder Ceroxidhydrat- und/oder Cerhydroxidschicht aufzubringen. Besonders vorteilhaft wird die SiO₂-Schicht aus einem überwiegend organischen Lösungsmittelgemisch unter Verwendung von Sol-Gel-Verfahren, wie nachstehend erläutert, aufgebracht. Es ist ferner bevorzugt, dass die SiO₂-Schicht ebenfalls eine diskrete Schicht ist, die mit der Cer-haltigen Schicht aus Ceroxid und/oder Ceroxidhydrat und/oder Cerhydroxid keine Mischschicht ausbildet.

Die erfindungsgemäßen Pigmente weisen mithin vorzugsweise einen Schutzschichtenaufbau aus einer Ceroxid- und/oder Ceroxidhydrat- und/oder Cerhydroxidschicht, direkt nachfolgend einer SiO₂-Schicht auf, auf die die angegebene Oberflächenbeschichtung mit wenigstens einem Silan mit wenigstens einer funktionellen Bindungsgruppe und wenigstens einem Silan ohne Bindungsgruppe aufgebracht ist. Dieser Schutzschichtenaufbau wird vorzugsweise direkt auf eine TiO₂-Schicht aufgebracht.

Die beim erfindungsgemäßen Perlglanzpigmenttyp auf die Ceroxid und/oder Ceroxidhydrat und/oder Cerhydroxid aufgetragene SiO₂-Schutzschicht, also die zweite Schutzschicht, stellt in jedem Fall eine weitere Barriere dar. Sie schützt die Perlglanzpigmentoberfläche vor eindringendem Wasser und hält umgekehrt radikalische Spezies, die die Ceroxid- und/oder Ceroxidhydrat- und/oder Cerhydroxidschicht möglicherweise passiert haben, zurück.

Vorteilhafte Eigenschaften der erfindungsgemäßen Perlglanzpigmente wurden nicht nur aufgrund des vorstehend beschriebenen, optimierten Oxidschichtaufbaus erzielt.

Überraschenderweise wurden weitere vorteilhafte anwendungstechnische Eigenschaften erhalten durch eine organisch-chemische Silan-Nachbeschichtung der SiO₂-Schicht. Überraschenderweise weist das erfindungsgemäße Perlglanzpigment ein ausgezeichnetes Orientierungsverhalten im Lackmedium auf. Die optischen Eigenschaften wie Glanz sind sehr gut.

Unter einer funktionellen Bindungsgruppe ist hier eine funktionelle Gruppe zu verstehen, die eine chemische Wechselwirkung zum Bindemittel einzugehen vermag. Die chemische Wechselwirkung kann dabei aus einer kovalenten Bindung, einer Wasserstoffbrückenbindung oder einer ionischen Wechselwirkung bestehen.

Die funktionellen Bindungsgruppen umfassen Acrylat-, Methacrylat-, Vinyl-, Amino-, Cyanat-, Isocyanat-, Epoxy-, Hydroxy-, Thiol-, Ureido- und/oder Carboxylgruppen.

Die Wahl einer geeigneten funktionellen Gruppe hängt von der chemischen Natur des Bindemittels ab. Bevorzugt wählt man eine den Funktionalitäten des Bindemittels chemisch kompatible funktionelle Gruppe, um eine gute Anbindung zu ermöglichen. Diese Eigenschaft ist im Hinblick auf wetterstabile und UV-stabile Perlglanzpigmente sehr wichtig, da auf diese Weise eine genügend große Haftfestigkeit zwischen Pigment und dem ausgehärtetem Bindemittel gegeben ist. Dies ist beispielsweise in Haftprüfungstests, wie dem Gitterschnitttest bei Schwitzwassertestbelastungen gemäß der DIN 50 017, nachzuprüfen. Das Bestehen eines derartigen Testes stellt eine notwendige Bedingung für die Verwendung von wetterstabilen Perlglanzpigmenten im Automobillack dar.

Die vorteilhaft als organisch-chemische Oberflächenbeschichtungsmittel verwendeten organofunktionellen Silane besitzen naturgemäß eine ausgeprägte Kondensationsneigung und damit Bindungsfähigkeit an eine SiO₂-Oberfläche. Die SiO₂-Oberfläche ist mit Silanolgruppen (Si-O-H) terminiert, die aufgrund ihrer chemischen Ähnlichkeit zu organofunktionellen Silanolen beste Anbindungsmöglichkeiten für diese Oberflächenbeschichtungsmittel liefern.

Die organofunktionellen Silane sind kommerziell verfügbar und werden beispielsweise von der Fa. Degussa, Rheinfelden, Deutschland, hergestellt und unter dem Handelsnamen "Dynasylan®" vertrieben. Weitere Produkte können von der Fa. OSi Specialties (Silquest^{®}-Silane) oder von der Fa. Wacker (insbesondere der Standard- und α-Silane aus der GENIOSIL®-Produktgruppe) bezogen werden.

Beispiele hierfür sind 3-Methacryloxypropyltrimethoxysilan (Dynasylan MEMO, Silquest A-174NT), Vinyltri(m)ethoxysilan (Dynasylan VTMO bzw. VTEO, Silquest A-151 bzw. A-171), 3-Mercaptopropyltri(m)ethoxysilan (Dynasylan MTMO oder 3201; Silquest A-189), 3-Glycidoxypropyltrimethoxysilan (Dynasylan GLYMO, Silquest A-187), tris-(3-Trimethoxysilylpropyl)isocyanurat (Silquest Y-11597), gamma-Mercaptopropyltrimethoxysilan (Silquest A-189), Bis-(3-Triethoxysilylpropyl)polysulfid (Silquest A-1289), Bis-(3-Triethoxysilyl)disulfid (Silquest A-1589), beta-(3,4-Epoxycyclohexyl)ethyltrimethoxysilan (Silquest A-186), Bis(triethoxysilyl)ethan (Silquest Y-9805), gamma-Isocyanatopropyltrimethoxysilan (Silquest A-Link 35, GENIOSIL GF40), (Methacryloxymethyl)tri(m)ethoxysilan (GENIOSIL XL 33, XL 36), (Methacryloxymethyl)(m)ethyldimethoxysilan (GENIOSIL XL 32, XL 34), Isocyanatomethyl)trimethoxysilan (GENIOSIL XL 43), (Isocyanatomethyl)methyldimethoxysilan (GENIOSIL XL 42), (Isocyanatomethyl)trimethoxysilan (GENIOSIL XL 43) 3-(Triethoxysilyl)propylbernsteinsäureanhydrid (GENIOSIL GF 20).

Bei einer bevorzugten Ausführungsform enthält das die SiO₂-Schicht modifizierende organofunktionelle Silangemisch neben wenigstens einem Silan ohne funktionelle Bindungsgruppe wenigstens ein aminofunktionelles Silan. Die Aminofunktion ist eine funktionelle Gruppe, die mit den meisten in Bindemitteln vorhandenen Gruppen chemische Wechselwirkungen eingehen kann. Dies kann eine kovalente Bindung, wie z.B. mit Isocyanat- oder Carboxylatfunktionen des Bindemittels, oder Wasserstoffbrückenbindungen, wie mit OH- oder COOR- Funktionen oder auch ionische Wechselwirkungen, beinhalten. Eine Aminofunktion ist daher für den Zweck der chemischen Anbindung des Effektpigmentes an verschiedenartige Bindemittel sehr gut geeignet.

### Bevorzugt werden hierzu folgende Verbindungen genommen:

Aminopropyltrimethoxysilan (Dynasylan AMMO; Silquest A-1110), Aminopropyltriethoxysilan (Dynasylan AMEO) oder N-(2-Aminoethyl)-3-aminopropyltrimethoxysilan (Dynasylan DAMO, Silquest A-1120) oder N-(2-Aminoethyl)-3-aminopropyltriethoxysilan, Triamino-funktionelles Trimethoxysilan (Silquest A-1130), bis-(gamma-Trimethoxysilylpropyl)amin (Silquest A-1170), N-ethylgamma-aminoisobutyltrimethoxysilan (Silquest A-Link 15), N-Phenyl-gammaaminopropyltrimethoxysilan (Silquest Y-9669), 4-Amino-3,3-dimethylbutyltrimethoxysilan (Silquest Y-11637), N-Cyclohexylaminomethylmethyldiethoxysilan (GENIOSIL XL 924). (N-Cyclohexylaminomethyl)triethoxysilan (GENIOSIL XL 926), (N-Phenylaminomethyl)trimethoxysilan (GENIOSIL XL 973) und deren Mischungen.

Bei einer weiterhin bevorzugten Ausführungsform ist das Silan ohne funktionelle Bindungsgruppe ein Alkylsilan. Das Alkylsilan weist vorzugsweise die Formel (I) auf:

R(_{4-z})Si(X)_{z}, (I)

Hierbei ist z eine ganze Zahl von 1 bis 3, R ist eine substituierte oder unsubstituierte, unverzweigte oder verzweigte Alkylkette mit 10 bis 22 C-Atomen und X steht für eine Halogen- und/oder Alkoxygruppe. Bevorzugt sind Alkylsilane mit Alkylketten mit mindestens 12 C-Atomen. R kann auch zyklisch mit Si verbunden sein, wobei in diesem Fall z üblicherweise 2 ist.

Ein derartiges Silan bewirkt eine starke Hydrophobierung der Pigmentoberfläche. Diese wiederum führt dazu, dass das derart beschichtete Perlglanzpigment in der Lackbeschichtung tendenziell nach oben aufschwimmt. Bei plättchenförmigen Effektpigmenten wird ein derartiges Verhalten als "leafing"-Verhalten bezeichnet.

Völlig überraschend wurde nun gefunden, dass eine Silanmischung bestehend aus mindestens einem Silan, welches wenigstens eine funktionelle Gruppe besitzt, die eine Anbindung an das Bindemittel ermöglicht, und einem wie oben beschriebenen, in Wasser unlöslichen oder kaum löslichen Alkylsilan ohne Aminogruppe optimale anwendungstechnische Eigenschaften der Perlglanzpigmente ermöglicht.

Die Perlglanzpigmente sind derart gut an den Lack gebunden, dass kein Verlust der Haftfestigkeit auftritt. Andererseits zeigen die Pigmente eine hervorragende planparallele Orientierung im Lack sowie ein "Rest-leafing" Verhalten, d.h. ein statistisch messbarer Teil der Pigmente befindet sich im oberen Bereich des ausgehärteten Basislackes in der Nähe zum Klarlack. Normalerweise führt eine Anordnung der Pigmente an der oberen Grenzfläche des Basislackes zu einem Verlust der Haftungseigenschaften, da das Perlglanzpigment aufgrund seiner plättchenförmigen Struktur als störende Barriere zwischen Klarlack und Basislack wirkt. Bei der vorliegenden Erfindung ordnen sich die Pigmente überraschenderweise nicht an der oberen Grenzfläche des Basislackes, sondern nur in der Nähe der oberen Grenzfläche des Basislackes an, wodurch eine zuverlässige Anbindung des Klarlackes an den Basislack möglich ist. Das heißt, die erfindungsgemäßen Pigmente wirken vorteilhaft als störende Barriere zwischen Klar- und Basislack.

Dieses "Rest-leafing" Verhalten und die sehr gute planparallele Orientierung bewirken verbesserte Glanzeigenschaften und eine hohe Farbtonreinheit der erfindungsgemäßen Perlglanzpigmente in beispielsweise einer Lackierung.

Bei einer Kettenlänge der Alkylsilane unter 10 C-Atomen ist die Hydrophobierung der Oberfläche nicht ausreichend, um derartige Effekte zu zeigen. Vermutlich können sich hier keine Segmente an der Pigmentoberfläche ausbilden, bei denen die Alkylketten parallel zueinander im Sinne einer "self-assembly monolayer" Schicht angeordnet sind. Derartige Schichten erhält man bevorzugt, wenn man eine Oberfläche mit Additiven belegt, welche eine Haftgruppe zur Oberfläche und Alkylketten mit mindestens 10 C-Atomen aufweisen.

Besitzen die Silane mehr als 22 C-Atome ist i. d. R. die Anbindung an das Bindemittelsystem durch das Silan mit funktionellen Anbindungsgruppen nicht mehr gut genug, d.h. man beobachtet Haftungsprobleme im Schwitzwassertest nach DIN 50017.

Bei einer weiteren bevorzugten Ausführungsform enthält die Oberflächenmodifizierung Silane der Strukturformel (II).

(R¹-X-[A -Y]ₙ-B)(_{4-z})Si(OR²)_{z} (II)

wobei
- n = 1 bis 100 ist,
- z für eine ganze Zahl von 1 bis 3 steht,
- R¹ für gerad- oder verzweigtkettiges Alkyl mit 1 bis 12 Kohlenstoffatomen, das mit Halogenen substituiert sein kann; Aryl mit 6 bis 12 C-Atomen; oder Aryl mit 6 bis 12 C-Atomen, das mit Alkyl mit 1 bis 6 Kohlenstoffatomen und/oder mit Halogenen substituiert sein kann; steht,

- R² für gerad- oder verzweigtkettiges Alkyl mit 1 bis 6 Kohlenstoffatomen steht,
- A und B unabhängig voneinander für eine zweiwertige Gruppe, die aus gerad- oder verzweigtkettigem Alkylen mit 1 bis 12 Kohlenstoffatomen; Arylen mit 6 bis 12 C-Atomen; oder Arylen mit 6 bis 12 C-Atomen, das mit Alkyl mit 1 bis 6 Kohlenstoffatomen und/oder mit Halogenen substituiert sein kann; besteht, stehen,
- X und Y unabhängig voneinander für O oder S stehen.
Als Halogen wird hier F, Cl, Br und/oder I verstanden.

Bei bevorzugten Ausführungsformen bestehen R¹ und R² unabhängig voneinander aus Methyl, Ethyl, n-Propyl, iso-Propyl, n-Butyl, iso-Butyl, tert.-Butyl, Phenyl, Biphenyl, Naphtyl, oder Mischungen davon.

Bei weiterhin bevorzugten Ausführungsformen bestehen A und B unabhängig voneinander aus Ethylen, Propylen, 1-Butylen, 2-Butylen, Phenylen, Phenylen, das mit Alkyl mit 1 bis 6 C-Atomen substituiert ist, und Mischungen davon.

Diese Silane können in reiner Form mit definiertem n oder in Mischungen mit verschiedenen n vorliegen.

Gemäß einer bevorzugten Ausführungsform liegt n in einem Bereich von 1 bis 20, weiter bevorzugt von 5 bis 15.

Bei einer besonders bevorzugten Ausführungsform enthält die Oberflächenbeschichtung Silane der Formel (III)

H₃CO-[CH₂-CH₂-O-]ₙCH₂-CH₂-Si(OR²)₃, (III)

wobei n = 1 bis 100, vorzugsweise 1 bis 20, weiter bevorzugt 5 bis 25 ist, und R² die gleiche Bedeutung wie oben angegeben hat. Besonders bevorzugt ist R² unabhängig voneinander Methyl oder Ethyl.

Auch diese Silane können in reiner Form mit einem definierten n oder in Mischungen (verschiedene n) vorliegen. Derartige Silane haben aufgrund ihrer Oxyethylengruppe(n) innerhalb der Kette besonders gute Benetzungs- und Dispergiereigenschaften. Erhältlich sind derartige Silane beispielsweise von der Firma OSi Specialities unter dem Produktnamen Silquest^{®} A-1230.

Die organofunktionellen Silane liegen vor dem Aufbringen auf die SiO₂-Schicht bevorzugt in überwiegend monomerer Form vor.

Die Mengen der in monomerer, oligomerer oder polymerer Form als Nachbeschichtung auf die SiO₂-Schicht aufgebrachten Oberflächenbeschichtungsmittel - in Bezug auf das gesamte, mit Ceroxid und SiO₂-beschichtete Perlglanzpigment - beträgt vorzugsweise 0,1 bis 6 Gew. -%, bevorzugt 0,2 bis 5 Gew. -% , besonders bevorzugt 0,3 bis 3 Gew. -% und ganz besonders bevorzugt 0,5 bis 2,5 Gew. -%.

Im Einzelfall kann auch hier die Menge von der Feinheit und spezifischen Oberfläche des Perlglanzpigmentes abhängen. Generell ist jedoch eine Menge in der Größenordung einer oder weniger Silan-Monolage(n) auf der Pigmentoberfläche ausreichend. Zu kleine Mengen führen zu keiner ausreichenden Belegung der Pigmentoberfläche und in der Folge zu schlechten Schwitzwassertestergebnissen in Lackapplikationen (Test nach DIN 50 017).

Das Mischungsverhältnis der wenigstens eine funktionelle Bindungsgruppe enthaltenden und der keine funktionelle Bindungsgruppe enthaltenden Silane zueinander beträgt (bezogen auf Gewichtsverhältnisse) vorzugsweise 1: 5 bis 5:1, weiter bevorzugt 1:3 bis 3:1 und besonders bevorzugt 1:2 bis 2:1, wobei sich diese Angabe auf Gew.-% der Silane in ihrer Form als Ausgangsverbindungen beziehen.

Enthält die Silanmischung insgesamt zu wenig funktionelle Bindungsgruppen, so wird die Oberflächenbeschichtung zu hydrophob. In der Lackapplikation kann dies bei einem Belastungstest wie der Schwitzwasserprüfung nach DIN 50 017 zu Haftungsproblemen führen. Bei einem Überschuss an funktionellen Bindungsgruppen hingegen ist die Oberfläche zu hydrophil und das Anpastungsverhalten des Pigmentes in einem Wasserlack sowie die Orientierung der Perlglanzpigmente in der ausgehärteten Lackapplikation ist schlechter. In der Schwitzwasserprüfung begünstigt eine zu ausgeprägte Hydrophilie des Pigments die Einlagerung von Wasser in die Lackschicht, was vor allem eine verminderte Abbildungsschärfe (DOI) sowie die Bildung von mikrofeinen Wasserblasen zur Folge haben kann.

Bei einer weiteren erfindungsgemäßen Ausführung wird das zu stabilisierende Perlglanzpigment mit einer Mischschicht aus Ceroxid und/oder Ceroxidhydrat und/oder Cer-hydroxid und SiO₂ als erste Schutzschicht beschichtet. Das eingesetzte Cer liegt in dreiwertiger oder in vierwertiger Form oder in Mischungen dieser beiden Formen vor, vorzugsweise wird dreiwertiges Cer eingesetzt. Bevorzugt ist jedoch eine Abfolge von zunächst aus Ceroxid und/oder Ceroxidhydrat und/oder Cerhydroxid und dann SiO₂, da diese eine höhere UV-Stabilität bringt.

Eine weitere erfindungsgemäße Ausführung besteht darin, dass das Glassplättchen eine oder mehrere Metalloxidschichten, vorzugsweise eine Schicht aus Zinnoxid, aufweist. Die Schicht aus Zinnoxid kann aufgebracht werden, wie beispielsweise in Beispiel 1 und 5 der DE 3535818 A1 beschrieben, die hiermit unter Bezugnahme aufgenommen wird. Diese Schicht wird vorzugsweise bereits beim Herstellungsprozess des Substrates aufgebracht und anschließend kalziniert. Zinnoxid wird bei der Herstellung von Perlglanzpigmenten verwendet, um einer TiO₂-Schicht, die auf das Substrat, vorzugsweise Glimmerplättchen, gefällt wird, eine Rutilstruktur zu induzieren. TiO₂ wächst auf Glimmer in einer Anatasstruktur auf, die aufgrund ihrer höheren Photoaktivität unerwünscht ist. Eine Vorbeschichtung des Substrats mit SnO₂ jedoch induziert eine Rutilmodifikation der nachfolgenden TiO₂-Schicht, da beide Oxide eine ähnliche Kristallstruktur aufweisen.

Es wurde nun überraschenderweise gefunden, dass eine zusätzliche Beschichtung mit SnO₂ nach einer TiO₂-Beschichtung, d.h. vor Aufbringung der ersten Schutzschicht aus oder mit Ceroxid und/oder Ceroxidhydrat und/oder Cer-hydroxid und der zweiten Schutzschicht aus SiO₂ die Wetterstabilität nochmals steigert. Die SnO₂-Schicht wird dabei vorzugsweise direkt auf die TiO₂-Schicht aufgebracht.

Bei einer weiteren erfindungsgemäßen Ausführungsform kann das Pigment - zusätzlich zur Schutzschicht aus oder mit SiO₂ und/oder Ceroxid und/oder Ceroxidhydrat und/oder Cerhydroxid - eine weitere Metalloxidbeschichtung enthalten. Bei diesen Metalloxiden handelt es sich bevorzugt um ZrO₂.

Erfindungsgemäß können auf die mit einem Metalloxid mit niedrigem Brechnungsindex (n kleiner 1,8), wie SiO₂-beschichtete Glasplättchen, weitere - bevorzugt einen hohen Brechungsindex (n größer 1,8) aufweisende - Schichten abgeschieden werden. Derartige Schichten werden vorzugsweise aus der Gruppe, bestehend aus Metallchalkogeniden, insbesondere Metalloxiden, Metallhydroxiden, Metalloxidhydraten, Metallsuboxiden und Metallsulfiden, Metallfluoriden, Metallnitriden, Metallcarbiden und deren Mischungen, ausgewählt.

Bevorzugt werden die Glassubstrate der Perlglanzpigmente mit einem mehrschichtigen Schichtaufbau mit oder aus Metalloxid, Metallhydroxid, Metallsuboxid und/oder Metalloxidhydrat beschichtet, wobei die Reihenfolge der Schichten variabel ist. Die Metalloxide, Metallhydroxide, Metallsuboxide und/oder Metalloxidhydrate können auch nebeneinander in derselben Schicht vorliegen.

Bevorzugt werden dabei die Substrate der Perlglanzpigmente mit einer oder mehreren Metalloxidschichten aus der Gruppe, bestehend aus oder umfassend TiO₂, Fe₂O₃, Fe₃O₄, TiFe₂O₅, ZnO, SnO₂, CoO, Co₃O₄, ZrO₂, Cr₂O₃ VO₂, V₂O₃, (Sn,Sb)O₂ und deren Mischungen, beschichtet. Besonders bevorzugt sind TiO₂ und/oder Fe₂O₃.

Bei einer weiteren Ausführungsform weist der mehrschichtige Schichtaufbau eine Schichtenfolge auf, bei dem wenigstens eine hochbrechende Schicht und wenigstens eine niedrig brechende Schicht in alternierender Weise auf einem Substrat angeordnet sind.

Bei der alternierenden Anordnung ist es auch möglich ein oder mehrere hoch brechende Schichten unmittelbar übereinander und nachfolgend ein oder mehrere niedrig brechende Schichten unmittelbar übereinander anzuordnen. Wesentlich ist jedoch, dass in dem Schichtaufbau hoch und niedrig brechende Schichten vorkommen.

Bevorzugt ist, dass der mehrschichtige Schichtaufbau eine Schichtenfolge aufweist, bei dem wenigstens eine hoch brechende Schicht, wenigstens eine niedrig brechende Schicht und wenigstens eine hoch brechende Schicht auf einem Substrat nacheinander angeordnet sind.

Auch bei dieser Variante können ein oder mehrere niedrig bzw. hoch brechende Schichten jeweils unmittelbar übereinander angeordnet sein. Wesentlich ist jedoch, dass in dem Schichtaufbau von innen nach außen hoch und niedrig und wiederum hoch brechende Schichten angeordnet sind.

Vorzugsweise enthält oder besteht die wenigstens eine hoch brechende Schicht aus Metalloxid und/oder Metallhydroxid aus der Gruppe, bestehend aus TiO₂, Fe₂O₃, Fe₃O₄, TiFe₂O₅, ZnO, SnO₂, CoO, Co₃O₄, ZrO₂, Cr₂O₃ VO₂, V₂O₃, (Sn, Sb)O₂ und deren Mischungen. Die niedrig brechende Schicht enthält oder besteht vorzugsweise aus Metalloxid und/oder Metallhydroxid aus der Gruppe, bestehend aus SiO₂, Al₂O₃ und Mischungen davon.

Perlglanzpigmente, die hoch und niedrig brechende Schichten aufweisen, ergeben besonders intensive Interferenzfarben. Insbesondere Perlglanzpigmente mit hoch brechenden und einer niedrig brechenden und wiederum einer hoch brechenden Schicht sind besonders bevorzugt. Durch eine Schichtfolge mit oder aus TiO₂ / SiO₂ / TiO₂ und optional noch einer Schicht mit Fe₂O₃ können intensive Goldtöne erhalten werden und sind daher besonders bevorzugt.

Bei einer weiteren Ausführungsform werden die als Substrat eingesetzten Glassplättchen von Perlglanzpigmenten beidseitig mit semitransparenten Metallschichten beschichtet.

Die Metalle der semitransparenten Metallschichten sind bevorzugt aus der Gruppe bestehend aus Silber, Aluminium, Chrom, Nickel, Gold, Platin, Palladium, Kupfer, Zink, deren Mischungen und deren Legierungen, ausgewählt. Die Dicken der semitransparenten Schichten liegen vorzugsweise in einem Bereich von ca. 2 bis ca. 30 nm, weiter bevorzugt von ca. 5 bis ca. 20 nm.

Der Brechungsindex der Metalloxidschicht ist, um einen guten Perlglanzeffekt zu ergeben, größer als 1,8, bevorzugt größer als 2,2, weiter bevorzugt größer als 2,3, noch weiter bevorzugt größer als 2,4, und besonders bevorzugt 2,5 oder größer.

Mit TiO₂ und / oder Eisenoxid beschichtete Glasflakes werden z.B. von der Fa. Engelhard, USA, unter der Bezeichnung Firemist^{®} und Reflecks^{®} bzw. von der Fa. Merck, Deutschland, unter der Bezeichnung Miraval^{®} und Ronastar^{®} angeboten.

Auch mehrschichtige Interferenzpigmente, wie sie z.B. in der DE 19618569 beschrieben werden, bestehend aus einem Trägermaterial, das mit alternierenden Schichten von Metalloxiden mit niedriger und hoher Brechzahl beschichtet ist, können erfindungsgemäß nachbeschichtet werden.

Die vorgenannten Pigmente lassen sich hervorragend zunächst mit einer ersten Schutzschicht aus oder mit Ceroxid und/oder Ceroxidhydrat und/oder Cerhydroxid und dann mit einer zweiten Schutzschicht aus SiO₂ und nachfolgender organisch-chemischer Nachbeschichtung gegenüber der durch UV-Licht induzierten photokatalytischen Aktivität stabilisieren.

Bei dem erfindungsgemäßen Verfahren kann das Pigment nach Schritt (c) vom Lösungsmittel getrennt und ggf. getrocknet werden. Weiterhin können sich, wenn nötig, Klassierungen anschließen.

Die Fällung der Cerhydroxid-Schicht findet unter optionaler Zugabe von Wasser und optionaler Zugabe von Base oder Säure bevorzugt bei Reaktionstemperaturen von Raumtemperatur bis zur Siedetemperatur des Lösungsmittels und gegebenenfalls in Gegenwart eines Katalysators statt. Die während der Abscheidungsreaktion freigesetzten sauren oder basischen Bestandteile, wie beispielsweise Protonen bzw. Hydroxylionen, können durch Zusatz einer Base bzw. Säure neutralisiert oder teilweise neutralisiert werden, bevor die Abscheidung von Silikat, vorzugsweise SiO₂ gestartet wird. Die Base bzw. Säure kann dabei gleichzeitig mit dem Cer-Reagenz zudosiert oder nach dem Einleiten der Cer-Salzlösung zugesetzt werden.

Es hat sich überraschend gezeigt, dass die Fällung der eingesetzten Cerreagenzien in einem pH-Wertebereich von 3 bis 8, vorzugsweise von pH-Wert 4 bis 7, nahezu vollständig, vorzugsweise vollständig, erfolgt, so dass bei der nachfolgenden Zugabe von vorzugsweise Tetraalkoxysilan und Fällung von SiO₂, eine nahezu reine, vorzugsweise reine, SiO₂-Schicht aufgebracht wird.

Erfindungsgemäß erfolgt die Aufbringung der Cer-haltigen Schicht und der SiO₂-Schicht sequentiell, so dass vorzugsweise voneinander getrennte und diskrete Schichten aufgebracht werden.

Die nicht katzinierte SiO₂-Schicht wird vorzugsweise durch ein Sol-Gel-Verfahren im überwiegend organischen Lösungsmittelgemisch aufgebracht. Hierbei wird in Schritt (b) die SiO₂-Schicht unter Verwendung von vorzugsweise Tetraalkoxysilan und optionaler Zugabe von Wasser aufgebracht. Derartige Sol-Gel-Verfahren, die in einem überwiegend organischen Lösungsmittelgemisch durchgeführt werden, haben gegenüber der SiO₂-Abscheidung, ausgehend von wässrigen Silikatlösungen, wie sie im Stand der Technik beschrieben wurden, Vorteile.

Moderne Bindemittelsysteme sind sehr empfindlich in Bezug auf die Anwesenheit von Salzen. Diese stören beispielsweise die kolloidale Stabilität von Bindemittelteilchen und können somit eine unkontrollierte Koagulation des Bindemittelsystems eines Lackes bedingen. Dadurch wird der Lack unbrauchbar. Außerdem fördern wasserlösliche Bestandteile wie Salze in Lackierungen osmotische Prozesse, so dass es durch Ansammlung von Wasser in der Lackschicht zu Blasenbildung und Enthaftungsproblemen kommen kann. Durch ein salzfreies bis salzarmes Herstellungsverfahren eines Perlglanzpigmentes entfallen aufwendige Reinigungsschritte. Das heißt, die erfindungsgemäßen Pigmente weisen nach Aufschlämmung geringere Leitfähigkeiten auf als sonst üblich.

Als überwiegendes Reaktionsnebenprodukt entstehen Alkohole, die zusammen mit dem alkoholischen Lösungsmittel, beispielsweise durch eine Destillation, aufgearbeitet und recycelt werden können.

Si(OR)₄ + 2 H₂O → SiO₂ + 4 ROH

Gemäß einer bevorzugten Weiterbildung der Erfindung entspricht die Alkoxygruppe des Tetraalkoxysilans dem verwendeten organischen Lösungsmittel. Bei Hydrolyse des Tetraalkoxysilans kommt es zur Freisetzung des korrespondierenden Alkohols, beispielsweise von Methanol, Ethanol oder Propanol, wenn R = CH₃, C₂H₅ bzw. C₃H₇ ist. Bei Verwendung von Methanol, Ethanol bzw. Propanol als organisches Lösungsmittel entsteht nach der Hydrolyse kein Gemisch aus verschiedenen Lösungsmitteln, was prozesstechnisch einen sehr großen Vorteil im Hinblick auf die Aufarbeitung bzw. Wiederverwendung des Lösungsmittels darstellt.

Ein weiterer Vorteil liegt in der Verwendung einer monomeren Ausgangssubstanz zur Herstellung der SiO₂-Schicht. Beim Sol-Gel-Prozeß im organischen Lösungsmittel beginnt die Reaktion mit der Hydrolyse des Tetraalkoxysilans, d.h. einem molekularen Monomeren. Wässrige Silikatlösungen wie Wasserglas hingegen liegen stets schon in einer oligomeren Form vorkondensierter -O-Si-O-Einheiten vor. Der Hydrolyseschritt sowie die nachfolgende Kondensation kann daher beim erfindungsgemäß bevorzugt verwendeten Sol-Gel-Verfahren besser kontrolliert werden. Dies wirkt sich vorteilhaft auf die Qualität und Morphologie der gebildeten Schicht aus. Vermutlich ist auch die kontrollierte Abscheidung des SiO₂ im Sol-Gel-Verfahren in überwiegend organischem Lösungsmittelgemisch für die hohe Qualität der Schicht und die dadurch erhaltene sehr gute Barrierewirkung verantwortlich.

Als Ausgangsverbindungen für die SiO₂-Schicht werden bevorzugt Tetraalkoxysilane verwendet. Beispiele hierfür sind: Tetramethoxysilan, Tetraethoxysilan, Tetrapropoxysilan, Tetraisopropoxysilan oder Tetrabutoxysilan oder Mischungen hieraus.

Die Katalyse des Sol-Gel-Verfahrens zur SiO₂-Abscheidung findet bevorzugt in basischem Milieu statt. Als Katalysatoren werden bevorzugt stickstoffhaltige Basen verwendet. Beispiele hierfür sind Ammoniak, Hydrazin, Methylamin, Ethylamin, Triethanolamin, Dimethylamin, Diethylamin, Methylethylamin, Trimethylamin, Triethylamin, Ethylendiamin, Trimethylendiamin, Tetramethylendiamin, 1-Propylamin, 2-Propylamin, 1-Butylamin, 2- Butylamin, 1-Propylmethylamin, 2-Propylmethylamin, 1-Butylmethylamin, 2-Butylmethylamin, 1-Propylethylamin, 2-Propylethylamin, 1-Butylethylamin, 2-Butylethylamin, Piperazin und Pyridin.

Diese Basen eignen sich auch für die Neutralisation der bei der Cerhydroxid-Abscheidung gegebenenfalls freigesetzten Protonen.

Zur Neutralisation der gegebenenfalls freigesetzten basischen Bestandteile bei der Cerhydroxid-Abscheidung eignen sich beispielsweise HNO₃ oder HCl:

Bei einer bevorzugten Variante des erfindungsgemäßen Verfahrens ist die Flüssigphase in Schritt (a) ein überwiegend organisches Lösungsmittelgemisch.

Weiterhin bevorzugt wird die gesamte Beschichtung (b) und (c) des Perlglanzpigmentes in einem überwiegend organischen Lösungsmittelgemisch bzw. in einer Flüssigphase mit einem überwiegenden Anteil an organischem Lösungsmittel bzw. in einer Flüssigphase mit einem überwiegenden Anteil an organischem Lösungsmittel. Unter einem überwiegend organischen Lösungsmittelgemisch wird hierbei ein solches verstanden, welches vorzugsweise weniger als 50 Gew-% Wasser enthält.

Als organische Lösungsmittel finden beispielsweise Ether, Ester, Alkohole, Ketone, Aldehyde oder Testbenzin Verwendung.

Bevorzugt werden als überwiegend organische Lösemittelgemische alkoholische Lösemittel mit einem Alkoholanteil von 50 bis 99 Gew.-% verwendet. Bevorzugt liegt der Alkoholanteil bei 60 bis 95 Gew.-% und besonders bevorzugt bei 70 bis 90 Gew.-%. Unterhalb eines Alkoholanteils von 50 Gew.-% können die anwendungstechnischen Eigenschaften der beschichteten Perlglanzpigmente beeinträchtigt werden. Dies kann beispielsweise bei einer Beschichtung einen Glanzverlust bedingen. Oberhalb von 99 Gew.-% schließlich enthält das Reaktionsgemisch offenbar zu wenig Wasser, was zu einer verzögerten Hydrolyse der Alkoxysilane führt, wodurch die Reaktionszeit zu lang wird.

Als Alkohole selbst kommen beispielsweise Methanol, Ethanol, n-Propanol; isoPropanol, n-Butanol, 2-Methylpropanol, 2-Methoxypropanol, Butylglycol, etc. in Frage. Möglich sind auch Mischungen dieser Alkohole in beliebigen Verhältnissen.

Der Restanteil des Gemisches setzt sich zum einen aus dem Reaktionspartner Wasser zusammen, zum anderen können weitere organische Lösemittel vorhanden sein.

Der Vorteil bei der Verwendung überwiegend organischer Lösungsmittel insbesondere bei Schritt (c) liegt in der sehr guten Löslichkeit vieler Silane in organischen Lösungsmitteln. Dadurch können neben hydrophilen Silanen insbesondere auch hydrophobe Silane zur Oberflächenbeschichtung verwendet werden. In wässrigen Lösungen hingegen sind viele Silane nicht löslich. Man behilft sich hier mit einer kontrollierten Vorhydrolyse der Silane [US 5,759,255] oder der Synthese von speziellen wasserlöslichen Oligomersystemen [DE 196 39 783]. Vorhydrolysierte Silansysteme sind jedoch nicht sehr lagerungsfähig. Durch weitere Hydrolyse oder Kondensationsprozesse können die Silane weiter vernetzen, oligomerisieren und schließlich für den Zweck der Oberflächenbeschichtung unbrauchbar werden. Wasserlösliche Oligomersysteme schließlich müssen erst aufwendig synthetisiert werden, sind ebenfalls schwieriger zu lagern und sind in der Vielfalt der Variationsmöglichkeiten der organofunktionellen Gruppen beschränkt. Insbesondere sind Alkylsilane mit 10 bis 22 C-Atomen nicht oder nur kaum in Wasser löslich. Hingegen können derartige unpolare Alkylsilane problemlos in den hier verwendeten Lösungsmitteln gelöst werden, was sich vorteilhaft auf die Schichtbildung an der Pigmentoberfläche auswirkt. Außerdem ist ein effektiver Materialeinsatz der relativ teuren Silane möglich.

Aminosilane hingegen sind zwar i. d. R. in Wasser löslich, werden jedoch autokatalytisch hydrolysiert und kondensieren zu oligomeren und polymeren Systemen. Sie besitzen daher in Wasser eine nur eingeschränkte Lagerungsstabilität.

Durch die größere Anzahl als Oberflächenbeschichtungsmittel zur Verfügung stehender Silane kann man die Oberflächeneigenschaften der erfindungsgemäßen Perlglanzpigmente in variabler Weise an die verschiedenen Lacksysteme anpassen. Hingegen ist man bei vorhydrolysierten Silanen und insbesondere bei wasserlöslichen Silanoligomeren auf kurzkettige aliphatische oder aromatische Reste bis maximal 8 C-Atome beschränkt.

Die Schritte (a) bis (c) des beschriebenen Verfahrens werden vorzugsweise im gleichen Flüssigmedium durchgeführt. Bei dieser Ausführungsform werden für Schritt (b) im überwiegend organischen Lösungsmittel hinreichend lösliche Cersalze verwendet. Bevorzugte Beispiele hierfür sind Cer(III)acetat, Cer(III)octoat, Cer(III) acetylacetonat, Cer(III)nitrat oder Cer(III)chlorid oder Cer(IV)ammoniumnitrat.

Bei einem bevorzugten Verfahren wird der Schritt (c) zur Modifizierung der SiO₂- und/oder Ceroxid- und/oder Ceroxidhydrat- und/oder Cerhydroxid-Schicht in einer Flüssigphase mit überwiegendem Anteil an organischem Lösungsmittel durchgeführt. Unter einem überwiegenden Anteil an organischem Lösungsmittel wird hierbei ein solches Lösungsmittelgemisch verstanden, welches vorzugsweise weniger als 50 Gew. -% Wasser enthält, d. h. mehr als 50 Gew. -% organisches Lösungsmittel.

Als organische Lösungsmittel finden beispielsweise Ether, Ester, Alkohole, Ketone, Aldehyde oder Testbenzin, Verwendung.

Die hier beschriebene bevorzugte Variante des erfindungsgemäßen Verfahrens zeichnet sich durch ein Eintopfverfahren aus, bei dem die organisch-chemische Nachbeschichtung unmittelbar im Anschluss an die Beschichtung mit Ceroxid/- hydroxid und nachfolgend SiO₂ erfolgt. Die Silane werden dabei direkt, d.h. ohne Vorhydrolyse zur Reaktionslösung, zugegeben, hydrolysieren in situ und kondensieren schließlich mit Hydroxylgruppen der SiO₂-Schicht, so dass eine kovalente Anbindung an der Pigmentoberfläche erfolgt. Dadurch ist eine äußerst einfache Prozeßführung bei gleichzeitig sehr guter Auswahl an verwendbaren Silanen gegeben.

Besonders vorteilhaft ist es, Silane mit wenigstens einer funktionellen Bindungsgruppe, zu nicht mehr als 50% vorhydrolysiert, vorzugsweise nicht vorhydrolysiert einzusetzen.

Bei einer weiteren Variante des erfindungsgemäßen Verfahrens kann nach Aufbringung der Ceroxid und/oder Ceroxidhydrat und/oder Cerhydroxid-Beschichtung aus wässriger Lösung die SiO₂-Beschichtung auch in wässrigem Milieu aus Silikatlösungen erfolgen. Die Bedingungen zur Abscheidung von Cer- oder Silikatverbindungen aus wässriger Lösung werden beispielsweise in Beispiel 2, Zeilen 30-37, der EP 0141174 bzw. in Beispiel 1 der EP 649886 B1 sowie in Beispiel 1 der DE 4207723 bzw. in Beispiel 1 der DE 2106613 beschrieben, die hiermit unter Bezugnahme aufgenommen werden. Anschließend kann gegebenenfalls eine Kalzinierung durchgeführt werden. Die hierzu notwendigen Bedingungen sind dem Fachmann an sich bekannt und können beispielsweise der DE 2106613 oder der DE 3535818 entnommen werden.

Insbesondere finden die erfindungsgemäßen beschichteten Perlglanzpigmente Verwendung als wetterstabile Perlglanzpigmente in Lacken, wie z. B. Automobillacken und Pulverlacken, Druckfarben, Kunststoffen, Kosmetischen Zubereitungen, Coatings für witterungsstabile Aussen- und Fassadenanwendungen.

Äußerst vorteilhaft ermöglichen die erfindungsgemäßen Perlglanzpigmente die Bereitstellung von einschichtigen UV-stabilen und wetterstabilen Lackierungen oder Beschichtungen, auf denen kein nachfolgender Klarlack oder Schutzlack aufgebracht werden muss.

Die der Erfindung zugrunde liegende Aufgabe wird ferner durch einen Gegenstand mit einer Beschichtung, die Perlglanzpigment gemäß einem der Ansprüche 1 bis 27 enthält, gelöst.

Gemäß einer bevorzugten Weiterbildung der Erfindung ist der Gegenstand eine Fahrzeugkarosserie, vorzugsweise eine Kraftfahrzeugkarosserie, oder eine Fassade, beispielsweise ein Fassadenelement.

Die folgenden Beispiele erläutern die Erfindung näher, ohne sie zu beschränken.

### Beispiel 1:

100g Glasflakes der Firma Glassflake Ltd. mit einer mittleren Dicke von ca. 300 nm (WO2004/056716A1) wurden nach einer Vorbelegung mit oxydischen Sn-Verbindungen bis zum Erscheinen einer blauen Interferenzfarbe mit TiO₂ belegt. Der Filterkuchen wurde direkt bei 650°C kalziniert, und man erhält ein stark glänzendes Effektpigment mit einer blauen Interferenzfarbe.

### Nicht erfindungsgemäßes 2:

100g mit TiO₂ beschichtete Glasflakes aus Beispiel 1 wurden in 300 ml Isopropanol suspendiert und auf Siedetemperatur gebracht. Unter Rühren gab man eine Lösung von 0,45 g Ethylendiamin in 9.5g H₂O hinzu. Danach leitete man über einen Zeitraum von 2 h 17,5 g Tetraethoxysilan in 15 g Isopropanol mit einer Dosierpumpe (Ismatec) kontinuierlich ein. Anschließend ließ man die Suspension noch 6 h lang weiterreagieren. Dann gab man 0,6 g Dynasylan AMEO und 1,7 g Dynasylan 9116 hinzu und ließ langsam abkühlen. Das Gemisch wurde über Nacht bei Raumtemperatur gerührt und am nächsten Tag abgenutscht. Der Pigmentfilterkuchen wurde anschließend 6 h lang bei 100°C unter Vakuum getrocknet. Das Pigment hatte einen theoretischen SiO₂- Gehalt von 4,9 Gew.-%.

### Erfindungsgemäßes Beispiel 3:

100g mit TiO₂ beschichtete Glasflakes (wie in Beispiel 1) wurden in 300 ml Isopropanol suspendiert und auf Siedetemperatur gebracht. Unter Rühren gab man zunächst 2,0 g H₂O und anschließend innerhalb einer Stunde eine Lösung aus 2,17 g Cernitrat-Hexahydrat in 100 g Isopropanol hinzu. Anschließend wurde eine Lösung von 0,45 g Ethylendiamin in 3,0 g H₂O hinzugegeben. Danach leitete man über einen Zeitraum von 2h 10,6 g Tetraethoxysilan und 22 g Isopropanol mit einer Dosierpumpe (Ismatec) kontinuierlich ein. Anschließend ließ man die Suspension noch 6 h lang weiter reagieren. Dann gab man 0,4 g Dynasylan AMEO und 1,3 g Dynasylan 9116 hinzu und ließ langsam abkühlen. Das Gemisch wurde über Nacht bei Raumtemperatur gerührt und am nächsten Tag abgenutscht. Der Pigmentfilterkuchen wurde anschließend bei 80°C unter Vakuum getrocknet.
Das Pigment hatte einen theoretischen Ce-Gehalt von 0,7 Gew.-% und einen SiO₂-Gehalt von 3,0 Gew.-%.

### Erfindungsgemäßes Beispiel 4:

100g mit TiO₂ beschichtete Glasflakes (wie in Beispiel 1) wurden in 300 ml Ethanol suspendiert und auf Siedetemperatur gebracht. Unter Rühren gab man zunächst 20 g Wasser und anschließend innerhalb einer Stunde eine Lösung aus 2,2 g Cernitrat-Hexahydrat in 10 g Wasser hinzu. Anschließend wurde eine Lösung von 2,0 g Ammoniak (25 Gew.-%) in 8,0 g Wasser hinzugegeben. Danach leitete man über einen Zeitraum von 2 h 10,6 g Tetraethoxysilan und 25 g Ethanol mit einer Dosierpumpe (Ismatec) kontinuierlich ein. Anschließend ließ man die Suspension noch 6 h lang weiter reagieren. Dann gab man 0,6 g Geniosil XL 926 und 0,4 g Dynasylan AMEO hinzu und ließ langsam abkühlen. Das Gemisch wurde über Nacht bei Raumtemperatur gerührt und der Feststoff am nächsten Tag abfiltriert. Der Pigmentfilterkuchen wurde anschließend bei 80°C über Nacht unter Vakuum getrocknet. Das Produkt hatte einen theoretischen Cer-Gehalt von 0,7 Gew.-% und einen SiO₂- Gehalt von 3,0 Gew.-%.

### Vergleichsbeispiel 5:

Kommerziell erhältliches Exterior CFS Mearlin Super Blue 6303Z (10 - 40 µm) der Fa. Engelhard.

### Vergleichsbeispiel 6:

Hergestellt wie Beispiel 1, jedoch wurde kein Aminosilan eingesetzt. Die Nachbeschichtung erfolgte nur mit 1,7 g Dynasylan 9116.

Die erfindungsgemäßen Beispiele und die Vergleichsbeispiele wurden verschiedenen Tests zur Wetterstabilität und zur UV-Stabilität unterzogen. Nachfolgend sind die Testmethoden beschrieben und die Ergebnisse aufgeführt.

### A Schwitzwassertest

Einige Pigmentproben wurden in ein Wasserlacksystem eingearbeitet und die Prüfapplikationen durch Spritzlackierung hergestellt. Der Basislack wurde mit einem handelsüblichen 1K-Klarlack überlackiert und anschließend eingebrannt. Diese Applikationen wurden nach DIN 50 017 (Kondenswssser-Konstantktimste) geprüft. Die Haftfestigkeit wurde mittels Gitterschnitt nach DIN EN ISO 2409 sofort nach Testende und eine Stunde später im Vergleich zur unbelasteten Probe geprüft. Hierbei bedeutet Gt 0 keine Veränderung und Gt 5 eine sehr starke Veränderung. Das Quellverhalten wurde unmittelbar nach Schwitzwasserbelastung in Anlehnung an die DIN 53230 visuell beurteilt. Hierbei bedeutet die Kennzahl 0: keine Veränderung und die Kennzahl 5: sehr starke Veränderung. Der Blasengrad wurde visuell nach DIN 53209 beurteilt. Auch hier reicht die relative Bewertungsskala von 0 ("sehr gut") bis 5 ("sehr schlecht"). Mit "m" bezeichnet man die Häufigkeit und mit "g" die Größe der Blasen. Schließlich wurde der DOI (distinctness of image) visuell beurteilt. Er kann sich im wesentlichen aufgrund der Quellvorgänge durch Wassereinlagerung verändern. ( 0 = sehr gut, 5 = sehr schlecht)

**Tab. 1: Schwitzwasser und Gitterschnittprüfungen**

| **Probe** | **Gitterschnitt** | | | **Blasengrad** | **Quellung** | **DOI** | |
|---|---|---|---|---|---|---|---|
| | 0-Muster | 0 h | 1h | | | 0 h | 1 h |
| Nichterfindungsgemäßes Beispiel 2 | Gt 0 | Gt 0 | Gt 0 | m1/g1 | 2 | 2 | 2 |
| Beispiel 3 | Gt 0 | Gt 0 | Gt 0 | m1/g1 | 2 | 2 | 2 |
| Beispiel 4 | Gt 0 | Gt 0 | Gt 0 | m1/g1 | 2 | 1 | 1 |
| Vergl. Beispiel 5 | Gt 1 | Gt 2 | Gt 1 | m1/g1 | 2 | 2 | 1 |
| Vergl. Beispiel 6 | Gt 1 | Gt 4 | Gt 2 | m2/g3 | 2 | 2 | 2 |

Die erfindungsgemäßen Beispiele 2 und 3 und 4 sind mit dem Vergleichsbeispiel 5 aus dem Stand der Technik in jeder Hinsicht vergleichbar und bestehen den Schwitzwassertest. Das Vergleichsbeispiel 6, bei dem die Nachbeschichtung lediglich aus einem Alkylsilan (16 C-Atome) ohne eine funktionelle Gruppe, die an das Lacksystem anbindet, bestand, ist jedoch hinsichtlich seiner Haftfestigkeit im Gitterschnitt deutlich schlechter und besteht den Test nicht.
Daher wurden mit dieser Probe auch keine weiteren Belastungstests wie ein WOM-Test durchgeführt.

### B WOM-Test

Die Pigmentproben wurden in ein Wasserlacksystem eingearbeitet und die Prüfapplikationen durch Spritzlackierung hergestellt. Der Basislack wurde mit einem handelsüblichen Klarlack überlackiert und anschließend eingebrannt. Die beschleunigte Bewitterungsprüfung erfolgte nach SAE-J 1960 in einem Atlas Ci-65 A Xeno-Testgerät mit wassergekühltem 6.5 kW Xenonstrahler.
Die Bestimmung der ΔE-Werte sowie die Einstufung nach der Grauskala erfolgte jeweils relativ zur entsprechenden unbelasteten Probe.

WOM-Tests werden allgemein von allen Schnellbewitterungsmethoden als die diejenige anerkannt, die die besten Korrelationen zu Florida-Bewitterungstests aufweisen. Ein bestandener Floridatest ist beispielsweise Voraussetzung für die Freigabe einer Beschichtung für den Automobilbereich. 4000 h WOM-Test entsprechen dabei in etwa den geforderten zwei Jahren Floridatest.

### C UV-Beständigkeit an Rakelabzügen

Dieser Test wurde in Anlehnung an den in der EP 0 870 730 beschrieben UV-Test zur Bestimmung der UV-Aktivität von TiO₂-Pigmenten als ein Schnelltest zur photochemischen Aktivität durchgeführt.
Hierzu wurden 1.0 g des Perlglanzpigmentes in 9.0 g eines doppelbindungsreichen melaminhaltigen Lackes eindispergiert. Es wurden Rakelabzüge auf kartoniertem Papier angefertigt und diese bei Raumtemperatur getrocknet. Die Rakelabzüge wurden geteilt und jeweils einer der beiden Abschnitte als unbelastetes Vergleichsmuster im Dunkeln gelagert. Anschließend wurden die Proben 150 min lang in einem QUV-Gerät der Fa. Q-Panel mit UV-haltigem Licht (UVA-340 Lampe, Bestrahlungsstärke 1,0 W/m²/nm) bestrahlt. Unmittelbar nach dem Testende wurden mit einem Farbmessgerät CM-508i der Fa. Minolta Farbwerte der belasteten Prüflinge relativ zum jeweiligen Rückstellmuster ermittelt. Die resultierenden ΔE*-Werte sind, nach der Hunter-L*a*b*-Formel berechnet, in Tab. 2 dargestellt.

Im Test wird im Wesentlichen eine graublaue Verfärbung der TiO₂-Schicht des Perlglanzpigmentes in den Rakelabzügen aufgrund von unter UV-Lichteinfluß gebildeten Ti(III)-Zentren beobachtet. Bedingung hierfür ist, dass das Elektronenloch das TiO₂ räumlich verlassen hat und - etwa durch Reaktion mit olefinischen Doppelbindungen des Bindemittels - nicht unmittelbar wieder mit dem verbleibenden Elektron rekombinieren kann. Da eine melaminhaltige Lackschicht die Diffusion von Wasser(dampf) und Sauerstoff an die Pigmentoberfläche deutlich verlangsamt, findet eine Reoxidation der Titan(III)-Zentren deutlich verzögert statt, so dass die Vergrauung gemessen und der ΔE*-Wert als Maß für die Lichtstabilität der Pigmente herangezogen werden kann. Ein größer ΔE*-Zahlenwert der belasteten Probe relativ zum unbelasteten Rückstellmuster bedeutet somit eine geringere Lichtstabilität des untersuchten Pigments.

Bei Verwendung dieses Tests bei den erfindungsgemäßen Beispielen ist zu unterscheiden, ob Proben mit oder ohne organische Oberflächenmodifizierung (OFM) eingesetzt werden.

Mit einer organischen Oberflächenmodifizierung wird die Pigmentoberfläche zumindest teilweise vom reaktiven, ungesättigten Melaminsystem isoliert. Daher kann die zur Bildung der farbgebenden Ti(III)-Zentren zwingend erforderliche Redox-Reaktion gegebenenfalls nicht mit der gleichen Effizienz und Geschwindigkeit stattfinden wie im zuerst geschilderten Fall. Somit kann bei organisch oberflächenmodifizierten Pigmenten eine weitaus geringere Verfärbung ermittelt werden. Dies bedeutet aber nicht, dass die UV-katalytische Aktivität in diesem Fall niedrig ist. Stets sind daher jedoch die ΔE*-Werte für ein nicht organisch modifiziertes erfindungsgemäßes Perlglanzpigment etwas höher als für die an der Oberfläche nachbehandelten Proben.

**Tabelle 2: WOM- und UV-Rakeitestergebnisse**

| | **WOM-Test** | | **UV-Test** | |
|---|---|---|---|---|
| **Probe** | **ΔE*** | **Grauskala** | **ΔE* (ohne OFM)** | **ΔE* (mit OFM)** |
| Nicht erfindungsgemäßes | | | 2,1 | 1,0 |
| 500h | 0,2 | 5 | | |
| 1000h | 0,2 | 5 | | |
| 2000h | 0,3 | 5 | | |
| 3000h | 0,3 | 4 - 5 | | |
| 4000h | 0,4 | 4 - 5 | | |
| Beispiel 3 | | | 2,6 | 1,4 |
| 500h | 0,1 | 5 | | |
| 1000h | 0,2 | 5 | | |
| 2000h | 0,2 | 5 | | |
| 3000h | 0,2 | 4 - 5 | | |
| 4000h | 0,4 | 4 - 5 | | |
| Beispiel 4 | | | 2,1 | 1,5 |
| 500h | 0,1 | 5 | | |
| 1000h | 0,2 | 5 | | |
| 2000h | 0,2 | 5 | | |
| 3000h | 0,2 | 5 | | |
| 4000h | 0,3 | 4 - 5 | | |
| Vergleichsbeispiel 5 (Exterior CFS Mearlin Super Blue 6303Z) | | | -- | 2,3+/-0,3 |
| 500h | 0,4 | 5 | | |
| 1000h | 0,5 | 5 | | |
| 2000h | 0,8 | 4 - 5 | | |
| 3000h | 0,8 | 4 - 5 | | |
| 4000h | 1,0 | . 4 | | |

| | | | | |
|---|---|---|---|---|
| OFM: Oberflächenmodifizierung | | | | |

Vergleicht man die Farbänderungen ΔE* des WOM-Testes der blauen Pigmente der erfindungsgemäßen Beispiele 3 und 4 mit jenem den Stand der Technik repräsentierenden Resultat des Vergleichsbeispiels 5, so erhält man niedrigere Werte und daher sogar bessere Wetterbeständigkeiten. Ähnliches gilt für die Lichtbeständigkeiten, die im Rakeltest ermittelt werden. Diese Ergebnisse erscheinen insbesondere bemerkenswert, da hier nur eine einzige oxidische Schicht zur Stabilisierung der Perlglanzpigmente verwendet wurde.

Die erfindungsgemäßen Perlglanzpigmente vermögen daher die Wetter- und UV-Stabilität mit.nur einer einzigen SiO₂-Schicht gegenüber Vergleichsbeispielen aus dem Stand der Technik zu verbessern.

### UV-Beständigkeit:

Zur näheren Untersuchung des Aufbaus der Oxidschicht und des Einflusses der SiO₂-Schichtdicke wurden weitere erfindungsgemäße Beispiele und Vergleichsbeispiele hergestellt und im Rakeltest hinsichtlich ihrer UV-Beständigkeit untersucht. Auf eine Nachbeschichtung wurde hier verzichtet, da diese den UV-Test verfälscht (s. oben).

### Erfindungsgemäße Beispiele 7 und 8:

100g mit TiO₂ beschichtete Glasflakes aus Beispiel 1 wurden in 300 ml Isopropanol suspendiert und.auf Siedetemperatur gebracht. Unter Rühren gab man zunächst 2,0 g H₂O und anschließend innerhalb einer Stunde eine Lösung aus 0,93 g Ce(NO₃)₃ x 6 H₂O in 8 g Isopropanol hinzu. Anschließend wurde eine Lösung von 0,45 g Ethylendiamin in 3,0 g H₂O hinzugegeben. Danach leitete man über einen Zeitraum von 2h eine bestimmte Menge Tetraethoxysilan (s. Tabelle 3) und 22 g Isopropanol mit einer Dosierpumpe (Ismatec) kontinuierlich ein. Anschließend ließ man die Suspension noch 6 h lang weiter reagieren. Das Gemisch wurde über Nacht bei Raumtemperatur gerührt und am nächsten Tag abgenutscht. Der Pigmentfilterkuchen wurde anschließend 6 h lang bei 100°C unter Vakuum getrocknet. In analoger Weise wurden verschiedene Mengen SiO₂ abgeschieden (siehe Tabelle 3).

### Beispiele 9 und 10:

Zum Vergleich wurden auch verschiedene Schutzschichten mit variierendem SiO₂-Gehalt hergestellt, ohne dass zusätzlich Cersalze abgeschieden wurden.

### Beispiel 11:

Ebenfalls wurde ein Vergleichsbeispiel mit cerhaltiger Schutzschicht (0,3% Ce-Gehalt), ohne das zusätzlich SiO₂ abgeschieden wurde, hergestellt.

Von allen Beispielen wurden die ΔE*-Werte des oben beschriebenen UV-Beständigkeitstests an Rakelabzügen bestimmt. Die eingesetzten Chemikalienmengen, theoretische Schutzschichtkomponentengehalte und die ΔE*-Werte sind in Tabelle 3 dargestellt.

### Beispiel 12 und 13 (Mischschicht):

100g mit TiO₂ beschichtete Glasflakes aus Beispiel 1 wurden in 300 ml Isopropanol suspendiert und auf Siedetemperatur gebracht. Unter Rühren gab man zunächst 2,0 g H₂O und anschließend eine Lösung von 0,45 g Ethylendiamin in 3,0 g H₂O zu. Danach leitete man über einen Zeitraum von 2h gleichzeitig eine Lösung von Tetraethoxysilan (siehe Tabelle 3) in 100 g Isopropanol und eine Lösung 0,93 g Ce(NO₃)₃ x 6 H₂O in 100 g Isopropanol mit einer Dosierpumpe (Ismatec) kontinuierlich ein. Anschließend ließ man die Suspension noch 6 h lang weiter reagieren. Das Gemisch wurde über Nacht bei Raumtemperatur gerührt und am nächsten Tag abgenutscht. Der Pigmentfilterkuchen wurde anschließend bei 80°C unter Vakuum getrocknet.
In analoger Weise wurden verschiedene Mengen SiO₂ abgeschieden (siehe Tabelle 3).

### Vergleichsbeispiele 14 und 15:

Die Vergleichsbeispiele 14 und 15 wurden in Anlehnung an die für Bsp.8 und 9 beschriebene Beschichtungsmethode dargestellt, wobei hier zunächst die Silikatverbindung und dann das Cersalz eingeleitet und gefällt wurde.

**Tabelle 3: UV- Rakeltestergebnisse**

| | | | | |
|---|---|---|---|---|
| **Probe** | **Schicht 1** | **Schicht 2** | **Verwendete Menge Tetraethoxysilan** | **ΔE*** |
| Beispiel 7 | 0,3 % Ce | 1 % SiO₂ | 3,47 g | 1,4 |
| Beispiel 8 | 0,3 % Ce | 2 % SiO₂ | 6,94 g | 0,9 |
| Vergleichsbeispiel 9 | ---- | 1 % SiO₂ | 3,47 g | 5,6 |
| Vergleichsbeispiel 10 | ---- | 2 % SiO₂ | 6,94 g | 3,0 |
| Vergleichsbeispiel 11 | 0,3 % Ce | ---- | ---- | 8,5 |
| Vergleichsbeispiel 12 | 0,3 % Ce /1 % SiO₂ | - | 3,47 g | 3,2 |
| Vergleichsbeispiel 13 | 0,3 % Ce / 2 % SiO₂ | - | 6,94 g | 2,1 |
| Vergleichsbeispiel 14 | 1 % SiO₂ | 0,3 % Ce | 3,47 g | 5,9 |
| Vergleichsbeispiel 15 | 2 % SiO₂ | 0,3 % Ce | 6,94 g | 3,2 |

Tab. 3 ist klar zu entnehmen, dass eine Schichtfolge aus 1. Ceroxid und/oder Ceroxid-Hydrat und/oder Cerhydroxid und 2. SiO₂ die beste UV-Beständigkeit bringt. Nur mit SiO₂ sowie nur mit Ceroxid und/oder Ceroxid-Hydrat und/oder Cerhydroxid geschützte Perlglanzpigmente oder die Schichtenfolge 1. SiO₂, 2. Ceroxid und/oder Ceroxid-Hydrat und/oder Cerhydroxid haben vergleichsweise deutlich niedrigere Beständigkeiten. Ebenso weisen Mischschichten aus SiO₂ und Ceroxid und/oder Ceroxid-Hydrat und/oder Cerhydroxid eine geringere stabilisierende Wirkung auf. Diese Befunde sind ein deutlicher Hinweis auf die synergetischen Effekte einer kombinierten, nacheinander gefällten Cerhydroxid- und SiO₂-Beschichtung, die nur dann wirksam werden, wenn zunächst die Ceroxid und/oder Ceroxid-Hydrat und/oder Cerhydroxid und erst anschließend die Siliziumoxidschicht gefällt wird.

### Beispiel 16

Nachfolgend wurden die Glanzeigenschaften von gemäß Beispiel 1 mit einer Ceroxid-Schicht und einer SiO₂-Schicht beschichteten Glasflakes aus Beispiel 1 mit Perlglanzpigmenten ohne oxidische Schutzschichten aus Beispiel 1 verglichen.

Hierzu wurden die Perlglanzpigmente aus Beispiel 1 mit einer Schicht aus Ceroxid und einer Schicht aus SiO₂ (siehe Beispiel 3) bzw. ohne Nachbeschichtung in ein handelsübliches NC-Lacksystem in einer Pigmentierungshöhe von 6 Gew.-%, bezogen auf das Gesamtgewicht des Lackes, eingearbeitet. Von den pigmentierten NC-Lacksystemen wurden Rakelabzüge mit einer Naßfilmdicke von 36 µm angefertigt. Die Rakelabzüge wurden dabei auf Prüfkarten mit schwarzer und weißer Fläche, erhältlich bei der Fa. BYK-Gardner, Deutschland, aufgebracht und für 30 Minuten bei 25°C getrocknet.

Die Glanzmessungen wurden mit einem Micro-TRI-Gloss µ - Gerät der Fa. BYK-Gardner gemäß Herstellerangaben bei einer Meßgeometrie von 60°, bezogen auf die Vertikale, durchgeführt. Eine Meßgeometrie von 60° ist für den sogenannten "Mittelglanz" im Bereich von 10 bis 70 Glanzpunkten geeignet, wobei ein höherer Zahlwert bei den Glanzpunkten bei einem höheren Glanz gemessen wird. Die Meßergebnisse sind in Tabelle 4 angegeben.

**Tabelle 4: Glanzwerte von Beispiel 1 und ohne SiO₂-Beschichtung**

| **Probe** | **60°-Glanz auf weißem Untergrund** | **60°-Glanz auf schwarzem Untergrund** |
|---|---|---|
| Beispiel 1 mit Ceroxid und SiO₂- Beschichtung (Bsp. 3) | 25,6 | 20,3 |
| Beispiel 1 ohne Nachbeschichtung | 25,8 | 20,1 |

Tabelle 4 ist zu entnehmen, daß die Beschichtung von Perlglanzpigmenten mit einer Schicht aus Ceroxid und einer Schicht aus SiO₂, das einen niedrigen Brechungsindex aufweist, überraschenderweise sogar zu einer Verbesserung des Glanzes führt. Im Hinblick auf den niedrigen Brechungsindex von SiO₂ wäre zu erwarten gewesen, dass die mit SiO₂ beschichteten Perlglanzpigmente deutlich geringere Glanzeigenschaften aufweisen als die Pigmente aus Beispiel 1.

## Patentansprüche

1. Wetterstabile Perlglanzpigmente auf der Basis eines mit hochbrechenden Metalloxiden beschichteten Glasplättchens mit einer auf der obersten Metalloxidschicht befindlichen Schutzdeckschicht,
**dadurch gekennzeichnet,**
**dass** das Glasplättchen eine mittlere Dicke von 50 bis 500 nm aufweist, auf das
eine Metalloxidschicht mit einem Brechungsindex n größer 1,8, welche TiO₂ mit einem Rutilgehalt von 80 bis 100 Gew. -% umfasst und eine Schutzdeckschicht, umfassend eine erste Schutzschicht mit Ceroxid und/oder Ceroxidhydrat und/oder Cerhydroxid und eine zweite Schutzschicht aus SiO₂, und
wobei auf die SiO₂ Schicht eine organisch-chemische Oberflächenbeschichtung aufgebracht ist.

2. Wetterstabile Perlglanzpigmente nach Anspruch 1,
**dadurch gekennzeichnet,**
**dass** die Glasplättchen eine mittlere Dicke von 60 bis 350 nm aufweisen.

3. Wetterstabile Perlglanzpigmente nach Anspruch 1 oder 2,
**dadurch gekennzeichnet,**
**dass** die SiO₂-Schicht keine kalzinierte Oxidschicht ist.

4. Wetterstabile Perlglanzpigmente nach einem der Ansprüche 1 bis 3,
**dadurch gekennzeichnet,**
**dass** die SiO₂-Schicht eine mittlere Dicke von 1 bis 50 nm aufweist.

5. Wetterstabile Perlglanzpigmente nach einem der Ansprüche 1 bis 4,
**dadurch gekennzeichnet,**
**dass** die SiO₂-Schicht 0,5 bis 10 Gew. -% SiO₂, bezogen auf das Gesamtgewicht des Perlglanzpigmentes, aufweist.

6. Wetterstabile Perlglanzpigmente nach einem der Ansprüche 1 bis 5,
**dadurch gekennzeichnet,**
**dass** die organisch-chemische Oberflächenbeschichtung ein oder mehrere Silane umfaßt, die vorzugsweise, bezogen auf das Gewicht des gesamten, mit SiO₂ oder Ceroxid und/oder Ceroxidhydrat und/oder Cerhydroxid und SiO₂ beschichteten Perlglanzpigmentes 0,1 bis 6 Gew.-% beträgt.

7. Wetterstabile Perlglanzpigmente nach einem der Ansprüche 1 bis 6,
**dadurch gekennzeichnet,**
**dass** die SiO₂-Schicht mit einem oder mehreren organofunktionellen Silanen, Aluminaten, Zirkonaten und/oder Titanaten oberflächenmodifiziert ist.

8. Wetterstabile Perlglanzpigmente nach Anspruch 7,
**dadurch gekennzeichnet,**
**dass** die organofunktionellen Silane wenigstens ein Silan mit wenigstens einer funktionellen Bindungsgruppe umfassen.

9. Wetterstabile Perlglanzpigmente nach einem der Ansprüche 7 bis 8,
**dadurch gekennzeichnet,**
**dass** die organofunktionellen Silane wenigstens ein Silan mit wenigstens einer funktionellen Bindungsgruppe und wenigstens ein Silan ohne funktionelle Bindungsgruppe umfassen.

10. Wetterstabile Perlglanzpigmente nach Anspruch 9,
**dadurch gekennzeichnet,**
**dass** die wenigstens eine funktionelle Bindungsgruppe aus der Gruppe, die aus Acrylat-, Methacrylat-, Vinyl-, Amino-, Cyanat-, Isocyanat-, Epoxy-, Hydroxy-, Thiol-, Ureido-, Carboxylgruppen und Mischungen davon besteht, ausgewählt wird.

11. Wetterstabile Perlglanzpigmente nach Anspruch 9,
**dadurch gekennzeichnet,**
**dass** das wenigstens eine Silan ohne funktionelle Bindungsgruppe ein in Wasser unlösliches oder schlecht lösliches organofunktionelles Silan ist.

12. Wetterstabile Perlglanzpigmente nach Anspruch 11,
**dadurch gekennzeichnet,**
**dass** das Silan ohne funktionelle Bindungsgruppe ein Alkylsilan ist, das vorzugsweise unter Verwendung eines Alkylsilans mit der Strukturformel (I)
R_{(4-z)}Si(X)_{z} (I)
aufgebracht ist, wobei R eine substituierte oder unsubstituierte, unverzweigte oder verzweigte Alkylkette mit 10 bis 22 C-Atomen ist,
X für eine Halogen- und/oder Alkoxygruppen steht und z eine ganze Zahl von 1 bis 3 ist.

13. Wetterstabile Perlglanzpigmente nach Anspruch 11,
**dadurch gekennzeichnet,**
**dass** das Silan ohne funktionelle Bindungsgruppe die Strukturformel (II)
(R¹-X-[A -Y]ₙ-B)_{(4-z)}Si(OR²)_{z} (II)
aufweist, wobei
- n = 1 bis 100 ist,
- z eine ganze Zahl von 1 bis 3 ist,
- R¹ für gerad- oder verzweigtkettiges Alkyl mit 1 bis 12 Kohlenstoffatomen, das mit Halogenen substituiert sein kann; Aryl mit 6 bis 12 C-Atomen; oder Aryl mit 6 bis 12 C-Atomen, das mit Alkyl mit 1 bis 6 Kohlenstoffatomen und/oder mit Halogenen substituiert sein kann; steht,
- R² für gerad- oder verzweigtkettiges Alkyl mit 1 bis 6 Kohlenstoffatomen steht
- A und B unabhängig voneinander für eine zweiwertige Gruppe, die aus gerad- oder verzweigtkettigem Alkylen mit 1 bis 12 Kohlenstoffatomen; Arylen mit 6_bis 12 C-Atomen; oder Arylen mit 6 bis 12 C-Atomen, das mit Alkyl mit 1 bis 6 Kohlenstoffatomen und/oder mit Halogenen substituiert sein kann; besteht, stehen,
- X und Y unabhängig voneinander für O oder S stehen.

14. Wetterstabile Perlglanzpigmente nach einem der vorherigen Ansprüche,
**dadurch gekennzeichnet,**
**dass** das Glasplättchen ein oder mehrere Metalloxidschichten, vorzugsweise eine oder mehrere Schichten aus Zinnoxid, aufweist, wobei das mit der einen oder mehreren Metalloxidschichten beschichtete plättchenförmige Substrat vorzugsweise kalziniert ist.

15. Verfahren zur Herstellung von wetterstabilen Perlglanzpigmenten nach einem der Ansprüche 1 bis 14, umfassend folgende Schritte:
- (a) Suspendieren von metalloxidbeschichtetem Glasplättchen in einer Flüssigphase, wobei das Metalloxid einen Brechungsindex von größer 1,8 aufweist,
- (b) Aufbringen einer Schutzdeckschicht mit einer ersten Schutzschicht aus Ceroxid und/oder Ceroxidhydrat und/oder Cerhydroxid und einer zweiten Schutzschicht aus SiO₂ auf das in Schritt (a) suspendierte Glasplättchen,
- (c) Aufbringen einer organisch-chemischen Oberflächenbeschichtung, auf die in Schritt (b) erzeugte, oberste Schutzschicht aus SiO₂.

16. Verwendung von wetterstabilen Perlglanzpigmenten nach einem der Ansprüche 1 bis 14 in Coatings, Lacken, Pulverlacken, Druckfarben, Kunststoffen und kosmetischen Zubereitungen.

17. Gegenstand,
**dadurch gekennzeichnet,**
**dass** der Gegenstand mit einer Beschichtung, die Perlglanzpigmente nach einem der Ansprüche 1 bis 14 enthält, versehen ist.

## Claims

1. Weather-resistant pearlescent pigments based on a glass platelet coated with highly refractive metal oxides, with a protective top coat disposed on the uppermost metal oxide layer,
**characterised in that**
the glass platelet has a mean thickness of 50 to 500 nm, to which is applied a metal oxide layer with a refractive index n greater than 1.8 containing TiO₂ with a rutile content of 80 to 100 % by weight and a protective top coat comprising a first protective layer with cerium oxide and/or hydrated cerium oxide and/or cerium hydroxide, and a second protective layer of SiO₂, and an organo-chemical surface coating is applied to the SiO₂ layer.

2. Weather resistant pearlescent pigments as claimed in claim 1,
**characterised in that**
the glass platelets have a mean thickness of 60 to 350 nm.

3. Weather resistant pearlescent pigments as claimed in claim 1 or 2,
**characterised in that**
the SiO₂ layer is not a calcined oxide layer.

4. Weather resistant pearlescent pigments as claimed in one of claims 1 to 3,
**characterised in that**
the SiO₂ layer has a mean thickness of 1 to 50 nm.

5. Weather resistant pearlescent pigments as claimed in one of claims 1 to 4,
**characterised in that**
the SiO₂ layer contains 0.5 to 10 % by weight of SiO₂ based on the total weight of the pearlescent pigment.

6. Weather resistant pearlescent pigments as claimed in one of claims 1 to 5,
**characterised in that**
the organo-chemical surface coating contains one or more silanes, which preferably account for 0.1 to 6 % by weight based on the total weight of the total pearlescent pigment coating with SiO₂ or cerium oxide and/or hydrated cerium oxide and/or cerium hydroxide and SiO₂.

7. Weather resistant pearlescent pigments as claimed in one of claims 1 to 6,
**characterised in that**
the SiO₂ layer is surface-modified with one or more organo-functional silanes, aluminates, zirconates and/or titanates.

8. Weather resistant pearlescent pigments as claimed in claim 7,
**characterised in that**
the organo-functional silanes include at least one silane with at least one functional binding group.

9. Weather resistant pearlescent pigments as claimed in one of claims 7 to 8,
**characterised in that**
the organo-functional silanes include at least one silane with at least one functional binding group and at least one silane without a functional binding group.

10. Weather resistant pearlescent pigments as claimed in claim 9,
**characterised in that**
the at least one functional binding group is selected from the group comprising acrylate, methacrylate, vinyl, amino, cyanate, isocyanate, epoxy, hydroxy, thiol, ureido, carboxylic groups and mixtures thereof.

11. Weather resistant pearlescent pigments as claimed in claim 9,
**characterised in that**
the at least one silane containing no functional binding group is an organo-functional silane which is insoluble or not readily soluble in water.

12. Weather resistant pearlescent pigments as claimed in claim 11,
**characterised in that**
the silane containing no functional binding group is an alkyl silane which is preferably applied using an alkyl silane based on structure formula (I)
R_{(4-z)}Si(X)₂ (I)
where R is a substituted or non-substituted, non-branched or branched alkyl chain with 10 to 22 C atoms,
X stands for a halogen and/or alkoxy groups and z is a whole number from 1 to 3.

13. Weather resistant pearlescent pigments as claimed in claim 11,
**characterised in that**
the silane containing no functional binding group is based on structure formula (II)
(R¹-X-[A-Y]ₙ-B)_{(4-z)}Si(OR²)_{z} (II)
in which
- n = 1 to 100,
- z is a whole number from 1 to 3,
- R¹ stands for a straight-chained or branched alkyl with 1 to 12 carbon atoms which may be substituted with halogens; aryl with 6 to 12 C atoms; or aryl with 6 to 12 C atoms which may be substituted with alkyl with 1 to 6 carbon atoms and/or halogens;
- R² stands for straight-chained or branched alkyl with 1 to 6 carbon atoms;
- A and B, independently of one another, stand for a divalent group which may comprise straight-chained or branched alkyls with 1 to 12 carbon atoms; arylene with 6 to 12 C atoms; or arylene with 6 to 12 C atoms which may be substituted with alkyl with 1 to 6 carbon atoms and/or with halogens;
- X and Y, independently of one another, stand for O or S.

14. Weather resistant pearlescent pigments as claimed in one of the preceding claims,
**characterised in that**
the glass platelets contain one or more metal oxide layers, preferably one or more layers of tin oxide, and the platelet-shaped substrate coated with the one or more metal oxide layers is preferably calcined.

15. Method of producing weather-resistant pearlescent pigments as claimed in one of claims 1 to 14, comprising the following steps:
- (a) suspending glass platelets coated with metal oxide in a liquid phase, which metal oxide has a refractive index greater than 1.8,
- (b) applying a protective top coat with a first protective layer of cerium oxide and/or hydrated cerium oxide and/or cerium hydroxide and a second protective layer of SiO₂ to the glass platelets suspended in step (a),
- (c) applying an organo-chemical surface coating to the uppermost protective layer of SiO₂ applied in step (b).

16. Use of weather-resistant pearlescent pigments as claimed in one of claims 1 to 14 in coatings, varnishes, powdered varnishes, printing inks, plastics and cosmetic preparations.

17. Object,
**characterised in that**
the object is provided with a coating containing the pearlescent pigments as claimed in one of claims 1 to 14.

## Revendications

1. Pigments nacrés résistant aux intempéries sur la base d'une plaquette de verre revêtue par des oxydes métalliques à haut indice de réfraction, avec une couche de couverture de protection se trouvant sur la couche d'oxyde métallique supérieure,
**caractérisés en ce que**
la plaquette de verre présente une épaisseur moyenne de 50 à 500 nm, sur laquelle sont appliquées une couche d'oxyde métallique avec un indice de réfraction n supérieur à 1,8, comprenant du TiO₂ avec une teneur en rutile de 80 à 100 % en poids, et une couche de couverture de protection, comprenant une première couche de protection avec de l'oxyde de cérium et/ou de l'hydrate d'oxyde de cérium et/ou de l'hydroxyde de cérium et une deuxième couche de SiO₂ et
sachant que sur la couche de SiO₂ est appliqué un enduit de surface organochimique.

2. Pigments nacrés résistant aux intempéries selon la revendication 1,
**caractérisés en ce que**
les plaquettes de verre présentent une épaisseur moyenne de 60 à 350 nm.

3. Pigments nacrés résistant aux intempéries selon la revendication 1 ou 2,
**caractérisés en ce que**
la couche de SiO₂ n'est pas une couche d'oxyde calcinée.

4. Pigments nacrés résistant aux intempéries selon l'une quelconque des revendications 1 à 3,
**caractérisés en ce que**
la couche de SiO₂ présente une épaisseur de couche moyenne de 1 à 50 nm.

5. Pigments nacrés résistant aux intempéries selon l'une quelconque des revendications 1 à 4,
**caractérisés en ce que**
la couche de SiO₂ présente 0,5 à 10 % en poids de SiO₂, rapportés au poids total du pigment nacré.

6. Pigments nacrés résistant aux intempéries selon l'une quelconque des revendications 1 à 5,
**caractérisés en ce que**
le revêtement organochimique de surface comporte un ou plusieurs silanes qui, de préférence, rapporté au poids de l'ensemble du pigment nacré revêtu de SiO₂ ou d'oxyde de cérium et/ou d'hydrate d'oxyde de cérium et/ou d'hydroxyde de cérium et de SiO₂, s'élèvent à 0,1 à 6 % en poids.

7. Pigments nacrés résistant aux intempéries selon l'une quelconque des revendications 1 à 6,
**caractérisés en ce que**
la couche de SiO₂ est modifiée en surface par un ou plusieurs silanes, aluminates, zirconates et/ou titanates organofonctionnels.

8. Pigments nacrés résistant aux intempéries selon la revendication 7,
**caractérisés en ce que**
les silanes organofonctionnels comprennent au moins un silane avec au moins un groupe fonctionnel de liaison.

9. Pigments nacrés résistant aux intempéries selon l'une quelconque des revendications 7 à 8,
**caractérisés en ce que**
les silanes organofonctionnels comprennent au moins un silane avec au moins un groupe fonctionnel de liaison et au moins un silane sans groupe fonctionnel de liaison.

10. Pigments nacrés résistant aux intempéries selon la revendication 9,
**caractérisés en ce que**
au moins ledit groupe fonctionnel de liaison est choisi parmi le groupe consistant en des groupes acrylate, méthacrylate, vinyle, amino, cyanate, isocyanate, époxyde, hydroxyle, thiol, uréido, carboxyles et des mélanges de ceux-ci.

11. Pigments nacrés résistant aux intempéries selon la revendication 9,
**caractérisés en ce que**
au moins ledit silane sans groupe fonctionnel de liaison est un silane organofonctionnel insoluble ou mal soluble dans l'eau.

12. Pigments nacrés résistant aux intempéries selon la revendication 11,
**caractérisés en ce que**
le silane sans groupe fonctionnel de liaison est un alkylsilane qui est appliqué de préférence moyennant l'utilisation d'un alkylsilane de la formule structurale (I)
R_{(4-z)}Si(X)_{z} (I)
dans laquelle R est une chaîne alkylique substituée ou non substituée, non ramifiée ou ramifiée avec 10 à 22 atomes de carbone,
X représente un halogène et/ou un groupe alcoxyle et z est un nombre entier de 1 à 3.

13. Pigments nacrés résistant aux intempéries selon la revendication 11,
**caractérisés en ce que**
le silane sans groupe fonctionnel de liaison présente la formule structurale (II)
(R¹-X-[A-Y]ₙ-B)_{(4-Z)}Si(OR²)_{z} (II)
dans laquelle
- on a n = 1 à 100,
- z est un nombre entier de 1 à 3
- R¹ représente un alkyle linéaire ou ramifié avec 1 à 12 atomes de carbone, qui peut être substitué par des halogènes ; un aryle avec 6 à 12 atomes de carbone ; ou un aryle avec 6 à 12 atomes de carbone qui peut être substitué par un alkyle avec 1 à 6 atomes de carbone et/ou par des halogènes,
- R² représente un alkyle linéaire ou ramifié avec 1 à 6 atomes de carbone
- A et B représentent indépendamment l'un de l'autre un groupe divalent qui consiste en des alkylènes linéaires ou ramifiés avec 1 à 12 atomes de carbone ; des arylènes avec 6 à 12 atomes de carbone ; ou des arylènes avec 6 à 12 atomes de carbone qui peuvent être substitués par un alkyle avec 1 à 6 atomes de carbone et/ou par des halogènes,
- X et Y représentent indépendamment l'un de l'autre un O ou un S.

14. Pigments nacrés résistant aux intempéries selon l'une quelconque des revendications précédentes,
**caractérisés en ce que**
la plaquette de verre comporte une ou plusieurs couches d'oxydes métalliques, de préférence une ou plusieurs couches d'oxyde d'étain, le substrat en forme de plaquette revêtu de ladite une ou de plusieurs couches d'oxydes métalliques étant de préférence calciné.

15. Procédé de préparation de pigments nacrés résistant aux intempéries selon l'une quelconque des revendications 1 à 14, comprenant les étapes suivantes :
- (a) mise en suspension de plaquettes de verre revêtues d'oxydes métalliques dans une phase liquide, l'oxyde métallique présentant un indice de réfraction de plus de 1,8,
- (b) application sur la plaquette de verre mise en suspension dans l'étape (a) d'une couche de couverture de protection avec une première couche de protection en oxyde de cérium et/ou en hydrate d'oxyde de cérium et/ou en hydroxyde de cérium et une deuxième couche de protection en SiO₂,
- (c) application d'un revêtement de surface organochimique sur la couche de protection supérieure en SiO₂ produite à l'étape (b).

16. Utilisation de pigments nacrés résistant aux intempéries selon l'une quelconque des revendications 1 à 14 dans des enduits, des laques, des laques fusibles, des encres d'imprimerie, des plastiques et des préparations cosmétiques.

17. Objet,
**caractérisé en ce que**
l'objet est doté d'un revêtement qui contient des pigments nacrés selon l'une quelconque des revendications 1 à 14.
